# EUROPEAN PATENT APPLICATION

(11) **EP 4 535 852 A1**
(43) Date of publication of application: **09.04.2025**
(21) Application number: 24765935.2
(22) Date of filing: 03.06.2024
(51) Int. Cl.: H04W 24/04, G06F 1/20, H04W 76/32, H04W 24/08, H04W 72/21, H04B 17/309, H04W 76/16, H04W 8/24, H04W 76/18, H04W 24/10

(54) **ELECTRONIC DEVICE FOR PERFORMING OVERHEATING CONTROL IN OVERHEATED STATE AND METHOD FOR OPERATING SAME**

(30) Priority: 24.08.2023 KR 20230111317; 20.10.2023 KR 20230141194; 23.11.2023 KR 20230164562
(71) Applicant: Samsung Electronics Co., Ltd, Suwon-si, Gyeonggi-do 16677 (KR)
(72) Inventor: SHIM, Byeongho, Suwon-si, Gyeonggi-do 16677 (KR); KIM, Hyoungkwon, Suwon-si, Gyeonggi-do 16677 (KR); LEE, Sanghyun, Suwon-si, Gyeonggi-do 16677 (KR); CHO, Seungmoo, Suwon-si, Gyeonggi-do 16677 (KR)
(74) Representative: Appleyard Lees IP LLP
(86) International application number: PCT/KR2024/007548
(87) International publication number: WO 2025/041983

(57) **Abstract**

An electronic device is provided. The electronic device may, when an overheating event occurs, transmit, to a base station, a first message including information associated with a preference of the electronic device for controlling overheating; in a case in which at least one control operation corresponding to the preference of the electronic device includes a first predefined operation, initiate an operation of causing the first predefined operation to be performed without waiting for a response from the base station; and in a case in which at least one control operation corresponding to the preference of the electronic device includes a second predefined operation, initiate an operation of causing the second predefined operation to be performed when a time period has elapsed after the transmitting of the first message.

## Description

### BACKGROUND

### 1. Field

The disclosure relates to an electronic device for performing an overheating control in an overheated state and a method of operating the electronic device.

### 2. Description of Related Art

An electronic device may notify a network of a state (e.g., overheating, and low power) of the electronic device using a radio resource control (RRC) message (e.g., a user equipment assistance information (UAI) message). If a UAI message is received from the electronic device, the network may transmit resource allocation information or control information matching the state of the electronic device to the electronic device.

### SUMMARY

Although an electronic device transmits a user equipment assistance information (UAI) message to a network, the UAI message may be lost or the electronic device may fail to receive a radio resource control (RRC) connection reconfiguration message for controlling overheating by the policy of the network. The electronic device may expect the network to assign an appropriate overheating control operation through the RRC connection reconfiguration message, when transmitting the UAI message to the network. However, when failing to receive the RRC connection reconfiguration message from the network, the electronic device may fail to perform an operation of relieving an overheated state. In addition, the electronic device may perform a self-overheating control operation independent of the UAI message. However, there is also a possibility of an occurrence of unnecessary signaling due to the self-overheating control operations. When the electronic device transmits a UAI message without a self-overheating control operation, the network may fail to respond to the UAI message appropriately for the purpose of the UAI message. Here, overheating control of the electronic device may not be performed.

According to an embodiment, there is provided an electronic device that is operable to perform a self-overheating control operation independent of an overheating control operation that is to be assigned by a base station to relieve an overheated state of the electronic device.

According to an embodiment, there is provided an electronic device that is operable to perform a self-overheating control operation in an overheated state even when failing to receive a response to a UAI message from a network after transmitting the UAI message.

According to an embodiment, an electronic device includes an antenna module including one or more antennas, an RF communication circuit connected to the antenna module, a processor operatively coupled to the RF communication circuit, and memory configured to store instructions. The instructions, when executed by the processor, may cause the electronic device to, when an overheating event occurs, transmit, to a base station, a first message including information associated with a preference of the electronic device for controlling overheating. The instructions, when executed by the processor, may cause the electronic device to, in a case in which at least one control operation corresponding to the preference of the electronic device includes a first predefined operation, initiate an operation of causing the first predefined operation to be performed without waiting for a response from the base station. The instructions, when executed by the processor, may cause the electronic device to, in a case in which at least one control operation corresponding to the preference of the electronic device includes a second predefined operation, initiate an operation of causing the second predefined operation to be performed when a time period has elapsed after the transmitting of the first message.

According to an embodiment, an electronic device includes an antenna module including one or more antennas, an RF communication circuit connected to the antenna module, a processor operatively coupled to the RF communication circuit, and memory configured to store instructions. The instructions, when executed by the processor, may cause the electronic device to, when an overheating event occurs, transmit, to a base station, a first message including information associated with a preference of the electronic device for controlling overheating. The instructions, when executed by the processor, may cause the electronic device to, in a case in which at least one control operation corresponding to the preference of the electronic device includes a first predefined operation, perform an overheating control operation of causing the first predefined operation to be performed without waiting for a response from the base station. The instructions, when executed by the processor, may cause the electronic device to, in a case in which at least one control operation corresponding to the preference of the electronic device includes a second predefined operation, perform an overheating control operation of causing the second predefined operation to be performed when a time period has elapsed after the transmitting of the first message.

According to an embodiment, a method of operating an electronic device includes when an overheating event of the electronic device occurs, transmitting, to a base station, a first message including information associated with a preference of the electronic device for controlling overheating; in a case in which at least one control operation corresponding to the preference of the electronic device includes a first predefined operation, initiating an operation of causing the first predefined operation to be performed without waiting for a response from the base station; and in a case in which at least one control operation corresponding to the preference of the electronic device includes a second predefined operation, initiating an operation of causing the second predefined operation to be performed when a time period has elapsed after the transmitting of the first message.

According to an embodiment, an electronic device is operable to perform a self-overheating control operation along with a transmission of a UAI message, even when a response to the UAI message is not received from a network. Thus, the same level of overheating control as an overheating control operation performed by a response to the UAI message from the network may be expected.

According to an embodiment, an electronic device is operable to perform a self-overheating control operation when failing to receive a response to a UAI message within a predetermined period of time. Thus, the same level of overheating control as an overheating control operation performed by a response to the UAI message may be expected.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment, according to an embodiment;
FIG. 2 is a block diagram of an electronic device in a network environment including a plurality of cellular networks according to an embodiment;
FIG. 3 is a diagram illustrating an example of a transmission and reception of a signal between an electronic device and a base station according to an embodiment;
FIG. 4 is a block diagram illustrating an example of a configuration of an electronic device according to an embodiment;
FIG. 5 is a flowchart illustrating an example in which an electronic device performs a self-overheating control operation when detecting at least one of a first overheating event or a second overheating event in a new radio (NR) non-standalone (NSA) environment, according to an embodiment;
FIG. 6 is a flowchart illustrating an example in which an electronic device performs a self-overheating control operation when detecting a third overheating event in an NR NSA environment, according to an embodiment;
FIG. 7 is a flowchart illustrating an example in which an electronic device performs a self-overheating control operation when detecting at least one of a first overheating event or a second overheating event in an NR standalone (SA) environment, according to an embodiment;
FIG. 8 is a diagram illustrating an example of log associated with an operation of an electronic device when an overheating event occurs in the electronic device according to an embodiment;
FIG. 9 is a flowchart illustrating an example of an operation of a first timer of an electronic device according to an embodiment;
FIG. 10 is a flowchart illustrating another example of an operation of a first timer of an electronic device according to an embodiment;
FIG. 11 is a flowchart illustrating another example of an operation of a first timer of an electronic device according to an embodiment; and
FIG. 12 is a flowchart illustrating an example of a method of operating an electronic device according to an embodiment.

### DETAILED DESCRIPTION

Hereinafter, embodiments will be described in detail with reference to the accompanying drawings. When describing the embodiments with reference to the accompanying drawings, like reference numerals refer to like components and a repeated description related thereto will be omitted.

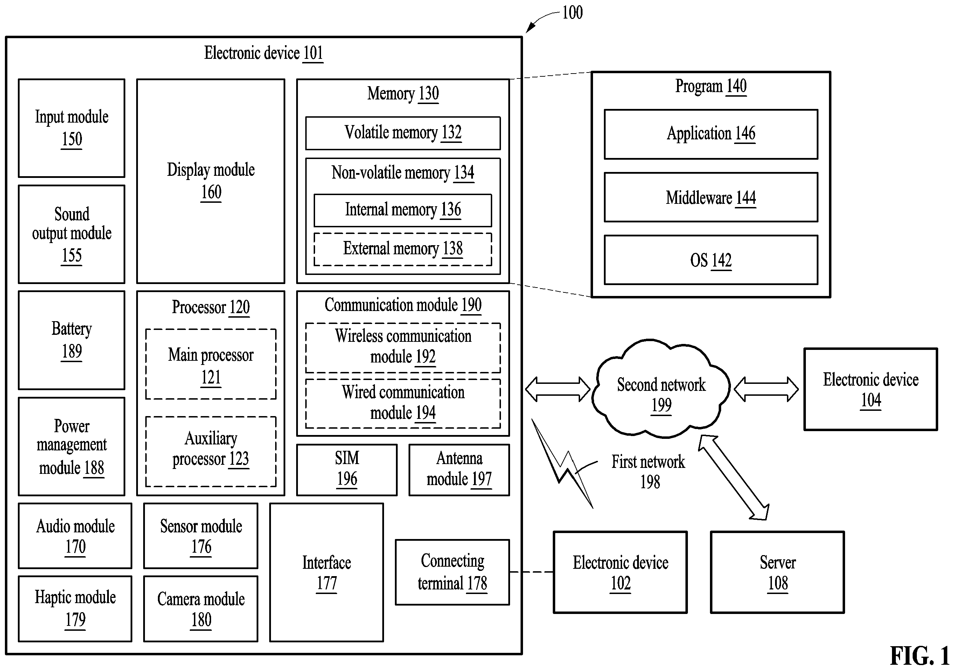

FIG. 1 is a block diagram illustrating an electronic device 101 in a network environment 100 according to an embodiment. Referring to FIG. 1, the electronic device 101 in the network environment 100 is operable to communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 is operable to communicate with the electronic device 104 via the server 108. According to an embodiment, the electronic device 101 includes a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 is operable to execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 is operable to store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an assistance processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the assistance processor 123, the assistance processor 123 may be adapted to consume less power than the main processor 121 or to be specific to a specified function. The assistance processor 123 may be implemented separately from the main processor 121 or as a part of the main processor 121.

The assistance processor 123 is operable to control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the assistance processor 123 (e.g., an ISP or a CP) may be implemented as a portion of another component (e.g., the camera module 180 or the communication module 190) that is functionally related to the assistance processor 123. According to an embodiment, the assistance processor 123 (e.g., an NPU) may include a hardware structure specified for artificial intelligence model processing. An artificial intelligence model may be generated through machine learning. Such learning may be performed, for example, by the electronic device 101 in which an artificial intelligence model is executed, or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may additionally or alternatively include a software structure other than the hardware structure.

The memory 130 is operable to store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 is operable to receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 is operable to output a sound signal to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented as separate from, or as part of the speaker.

The display module 160 is operable to visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure the intensity of force incurred by the touch.

The audio module 170 is operable to convert a sound into an electrical signal or vice versa. According to an embodiment, the audio module 170 may obtain the sound via the input module 150 or output the sound via the sound output module 155 or an external electronic device (e.g., the electronic device 102 such as a speaker or headphones) directly or wirelessly connected to the electronic device 101.

The sensor module 176 is operable to detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 is operable to support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 is operable to convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 is operable to capture a still image and moving images. According to an embodiment, the camera module 180 may include one or more lenses, image sensors, ISPs, or flashes.

The power management module 188 is operable to manage power supplied to the electronic device 101. According to an embodiment, the power management module 188 may be implemented as, for example, at least a part of a power management integrated circuit (PMIC).

The battery 189 is operable to supply power to at least one component of the electronic device 101. According to an embodiment, the battery 189 may include, for example, a primary cell which is not rechargeable, a secondary cell which is rechargeable, or a fuel cell.

The communication module 190 is operable to support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 is operable to transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 is operable to form a mmWave antenna module. According to an embodiment, the mmWave antenna module includes a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed at the electronic device 101 may be executed at one or more of external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To this end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

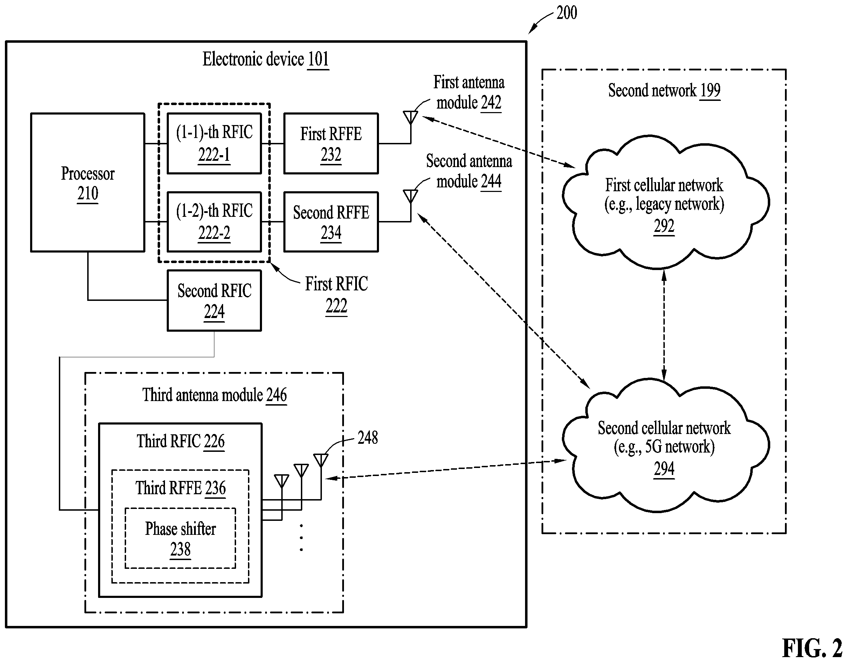

FIG. 2 is a block diagram of an electronic device 101 in a network environment 200 including a plurality of cellular networks according to an embodiment.

Referring to FIG. 2, the electronic device 101 may include a processor 210 (e.g., the processor 120 of FIG. 1 or a CP), a (1-1)-th radio frequency integrated circuit (RFIC) 222-1, and a (1-2)-th RFIC 222-2, a second RFIC 224, a first radio frequency front end (RFFE) 232, a second RFFE 234, a first antenna module 242, a second antenna module 244, and a third antenna module 246. Depending on embodiments, the (1-1)-th RFIC 222-1 and the (1-2) RFIC 222-2 may be implemented as one RFIC 222. The second network 199 may include a first cellular network 292 (e.g., a legacy network) and a second cellular network 294 (e.g., a 5G network). The electronic device 101 may further include at least one of the components described with reference to FIG. 1, and the second network 199 may further include at least one another network. According to an embodiment, the second RFIC 224 may be omitted or may be included as a portion of the third RFIC 226.

According to an embodiment, the (1-1)-th RFIC 222-1, the (1-2)-th RFIC 222-2, the second RFIC 224, the first RFFE 232, and the second RFFE 234 of FIG. 2 may be included in the communication module 190 (e.g., the wireless communication module 192) of FIG. 1, and the first antenna module 242, the second antenna module 244, and the third antenna module 246 of FIG. 2 may be included in the antenna module 197 of FIG. 1.

According to an embodiment, the processor 210 is operable to establish a communication channel of a band to be used for wireless communication with the first cellular network 292 and support legacy network communication through the established communication channel. The first cellular network 292 may be, for example, a legacy network including a second generation (2G) network, a third generation (3G) network, a 4G network, or long-term evolution (LTE) network. The processor 210 is operable to establish a communication channel corresponding to a first band (e.g., about 6 GHz to about 60 GHz) (or a 5G standard frequency range (FR) 2 (e.g., 24.25 GHz to 52.6 GHz)) among bands to be used for wireless communication with the second cellular network 294 and may support 5G network communication through the established communication channel. The second cellular network 294 may be a 5G network defined by a third generation partnership project (3GPP). The processor 210 is operable to establish a communication channel corresponding to a second band (e.g., about 6 GHz or less) (or a 5G standard FR1 (e.g., 410 MHz to 7.125 GHz)) among bands to be used for wireless communication with the second cellular network 294 and may support 5G network communication through the established communication channel.

According to an embodiment, during transmission, the (1-1)-th RFIC 222-1 (or the first RFIC 222) is operable to convert a baseband signal generated by the processor 210 into a radio frequency (RF) signal of a frequency band (e.g., about 700 MHz to about 3 GHz) to be used in the first cellular network 292. During reception, an RF signal may be received or acquired from the first cellular network 292 via the first antenna module 242 and may be preprocessed through the first RFFE 232. The (1-1)-th RFIC 222-1 (or the first RFIC 222) is operable to convert the preprocessed RF signal into a baseband signal such that the signal may be processed by the processor 210.

According to an embodiment, during transmission, the (1-2)-th RFIC 222-2 (or the first RFIC 222) is operable to convert a baseband signal generated by the processor 210 into an RF signal (hereinafter, referred to as a "5G Sub6 RF signal") of a Sub6 band (e.g., about 6 GHz or less) to be used in the second cellular network 294. During reception, the 5G Sub6 RF signal may be received or acquired from the second cellular network 294 via the second antenna module 244 and may be preprocessed through the second RFFE 234. The (1-2)-th RFIC 222-2 (or the first RFIC 222) is operable to convert the preprocessed 5G Sub6 RF signal into a baseband signal that may be processed by the processor 210.

According to an embodiment, the third RFIC 226 is operable to convert a baseband signal generated by the processor 210 into an RF signal (hereinafter, referred to as a "5G Above6 RF signal") of a 5G Above6 band (e.g., about 6 GHz to about 60 GHz) to be used in the second cellular network 294. During reception, the 5G Above6 RF signal may be received or acquired from the second cellular network 294 via the third antenna module 246 (e.g., an antenna 248) and may be preprocessed through the third RFFE 236. The third RFIC 226 is operable to convert the preprocessed 5G Above6 RF signal into a baseband signal that may be processed by the processor 210. According to an embodiment, the third RFFE 236 may be formed as a portion of the third RFIC 226.

According to an embodiment, the electronic device 101 includes the second RFIC 224 separately from the third RFIC 226 or as at least a portion of the third RFIC 226. Here, the second RFIC 224 is operable to convert the baseband signal generated by the processor 210 into an RF signal (hereinafter, referred to as an "intermediate frequency (IF) signal") of an IF band (e.g., about 9 GHz to about 11 GHz) and is operable to transmit the IF signal to the third RFIC 226. The third RFIC 226 is operable to convert the IF signal into a 5G Above6 RF signal. During reception, the 5G Above6 RF signal may be received or acquired from the second cellular network 294 via the third antenna module 246 (e.g., the antenna 248) and may be converted into an IF signal by the third RFIC 226. The second RFIC 224 is operable to convert the IF signal into a baseband signal such that the signal may be processed by the processor 210.

According to an embodiment, at least one of the first antenna module 242 or the second antenna module 244 may be omitted or combined with another antenna module to process RF signals of a plurality of corresponding bands.

According to an embodiment, the third RFIC 226 and the antenna 248 may be disposed on the same substrate to form the third antenna module 246. For example, the processor 120 may be disposed on a first substrate (e.g., a main PCB). In this example, the third RFIC 226 may be disposed on a partial area (e.g., a bottom surface) of a second substrate (e.g., a sub PCB) separate from the first substrate, and the antenna 248 may be disposed on another partial area (e.g., a top surface) of the second substrate (e.g., the sub PCB), to form the third antenna module 246. The third RFIC 226 and the antenna 248 may be disposed on the same substrate, and accordingly, it is possible to reduce a length of a transmission line between the third RFIC 226 and the antenna 248. That is, for example, a loss (e.g., attenuation) of a signal of a high frequency band (e.g., about 6 GHz to about 60 GHz) used in 5G network communication due to a transmission line may be reduced. Thus, the electronic device 101 may enhance the quality or speed of communication with the second cellular network 294 (e.g., a 5G network).

According to an embodiment, the antenna 248 is formed as an antenna array including a plurality of antenna elements that may be used for beamforming. In this case, the third RFIC 226 may include, for example, a plurality of phase shifters 238 corresponding to the plurality of antenna elements as a portion of the third RFFE 236. During transmission, each of the plurality of phase shifters 238 is operable to convert a phase of a 5G Above6 RF signal to be transmitted to the outside (e.g., a base station of a 5G network) of the electronic device 101 through a corresponding antenna element. During reception, each of the plurality of phase shifters 238 is operable to convert a phase of a 5G Above6 RF signal received from the outside (e.g., the base station of the 5G network) through the corresponding antenna element into the same or substantially the same phase. This enables a transmission or reception through beamforming between the electronic device 101 and the outside.

The second cellular network 294 may be operated independently of the first cellular network 292 (e.g., standalone (SA)) or in connection to the first cellular network 292 (e.g., non-standalone (NSA)). For example, a 5G network may include only an access network (e.g., a 5G radio access network (RAN) or a next generation RAN (NG RAN)) and may not include a core network (e.g., a next generation core (NGC)). In this case, after accessing an access network of the 5G network, the electronic device 101 may access an external network (e.g., the Internet) under a control of a core network (e.g., an evolved packet core (EPC)) of a legacy network. Protocol information (e.g., LTE protocol information) for communication with a legacy network or protocol information (e.g., NR protocol information) for communication with the 5G network may be stored in a memory (e.g., the memory 130 of FIG. 1) to be accessed by the processor 210.

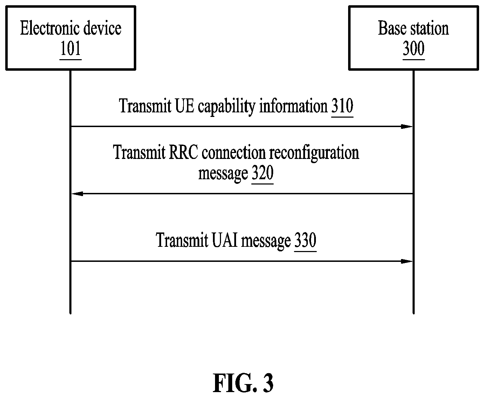

FIG. 3 is a diagram illustrating an example of a transmission and reception of a signal between an electronic device and a base station according to an embodiment.

Referring to FIG. 3, in operation 310, the electronic device 101 may transmit user equipment (UE) capability information to a base station 300 (e.g., an LTE base station and/or a 5G base station). The UE capability information may include, for example, a parameter indicating whether the electronic device 101 supports overheating assistance information. The electronic device 101 may notify the base station 300 of whether the electronic device 101 supports overheating assistance, using the UE capability information.

According to an embodiment, the electronic device 101 may be connected to an LTE base station in an NR NSA environment or E-UTRA NR dual connectivity (EN-DC). The electronic device 101 is operable to transmit the UE capability information including the parameter (e.g., overheatingInd-r14 and/or overheatinglndForSCG-r16 of 3GPP technical specification (TS)) indicating whether the overheating assistance information is supported to the LTE base station. Here, r14 may represent release 14 of 3GPP TS, and r16 may represent release 16 of 3GPP TS.

According to an embodiment, the electronic device 101 may be connected to a 5G base station in an NR SA environment. The electronic device 101 may transmit UE capability information (e.g., UE-NR-capability information of 3GPP TS) including a parameter (e.g., overheatingInd of 3GPP TS) indicating whether overheating assistance information is supported to a 5G base station.

In operation 320, the base station 300 (e.g., an LTE base station and/or a 5G base station) may transmit a radio resource control (RRC) connection reconfiguration message to the electronic device 101. For example, the base station 300 may determine one or more RRC parameters based on the UE capability information received from the electronic device 101 and may generate an RRC connection reconfiguration message including the one or more determined RRC parameters. An RRC parameter may include, for example, an RRC parameter (hereinafter, referred to as an "overheating-related RRC parameter") that sets (or configures) the electronic device 101 to notify the base station 300 of overheating (e.g., an internal overheating) detected by the electronic device 101. The base station 300 may transmit the RRC connection reconfiguration message including the one or more determined RRC parameters (e.g., overheating-related RRC parameters) to the electronic device 101.

According to an embodiment, in the NR NSA environment, the LTE base station is operable to transmit an RRC connection reconfiguration message including an overheating-related RRC parameter (e.g., an overheatingAssistanceConfig parameter of 3GPP TS and/or an overheatingAssistanceConfigForSCG parameter of 3GPP TS) to the electronic device 101.

According to an embodiment, in the NR SA environment, the 5G base station is operable to transmit an RRC connection reconfiguration message including an overheating-related RRC parameter (e.g., an overheatingAssistanceConfig parameter of 3GPP TS) to the electronic device 101.

In operation 330, the electronic device 101 may transmit UE assistance information (UAI) (or a UAI message) to the base station 300 (e.g., an LTE base station and/or a 5G base station).

According to an embodiment, when an overheatingAssistanceConfig parameter in the RRC connection reconfiguration message received from the LTE base station is set to "setup" in the NR NSA environment, the electronic device 101 may recognize that the electronic device 101 is configured to notify the LTE base station of a detected overheating event and that the electronic device 101 is configured to provide overheating assistance information to the LTE base station. When an overheating event occurs, the electronic device 101 may transmit a UAI message including overheating assistance information to the LTE base station. When an overheating event occurs, the electronic device 101 may notify the base station 300 of an overheated state of the electronic device 101 using the UAI message.

According to an embodiment, when an overheatingAssistanceConfig parameter in the RRC connection reconfiguration message received from the LTE base station is set to "setup" in the NR NSA environment, when an overheatingAssistanceConfigForSCG parameter is included in the RRC connection reconfiguration message, and when the overheatingAssistanceConfigForSCG parameter is set to "true," the electronic device 100 may recognize that the electronic device 101 is configured to provide overheating assistance information for an NR SCG to the LTE base station. When an overheating event occurs, the electronic device 101 may transmit a UAI message including overheating assistance information to the LTE base station.

According to an embodiment, in the NR SA environment, the electronic device 101 is operable to receive an RRC connection reconfiguration message from the 5G base station. When an overheatingAssistanceConfig parameter in the RRC connection reconfiguration message received from the 5G base station is set to "setup," the electronic device 100 is operable to recognize that the electronic device 101 is configured to provide overheating assistance information to the 5G base station. When an overheating event occurs, the electronic device 101 is operable to transmit UAI including overheating assistance information to the 5G base station.

According to an embodiment, examples of overheating events in each of the NR NSA environment and the NR SA environment are shown in Table 1 below.

**[Table 1]**

| Type of overheating event | NR NSA environment | NR SA environment |
|---|---|---|
| Event #1 | 1. Event matching release of NR component carrier (CC) reduction (or drop) | 1. Event matching release of NR CC reduction (or drop) |
| | | 2. Event matching release of "reduction in the number of RX antennas and transmission power limitation" |
| | 2. Event matching release of LTE fall back (FB) | |
| | | 3. Event matching release of SA disable |
| Event #2 | Event matching NR CC reduction (or drop) | Event matching NR CC reduction (or drop) |
| Event #3 | 1. Event matching release of LTE CC reduction (or drop) | Event matching "reduction in the number of RX antennas (e.g., reduction in the number of antennas from 4RX to 2RX) and transmission power limitation" |
| | 2. Event matching LTE FB | |
| Event #4 | - | Event matching SA disable |
| Event #5 | Event matching LTE CC reduction (or drop) | - |

According to an embodiment, events #1 to #5 shown in Table 1 above may be classified according to the temperature of the electronic device 101. For example, a temperature (e.g., T1) that triggers event #1 may be lower than a temperature (e.g., T2) that triggers event #2, and the temperature (e.g., T2) that triggers event #2 may be lower than a temperature (e.g., T3) that triggers event #3. The temperature (e.g., T3) that triggers event #3 may be lower than a temperature (e.g., T4) that triggers event #4, and the temperature (e.g., T4) that triggers event #4 may be lower than a temperature (e.g., T5) that triggers event #5.

According to an embodiment, the electronic device 101 is operable to perform a self-overheating control operation corresponding to a detected overheating event. The self-overheating control operation of the electronic device 101 may be, for example, an overheating control operation independent of a base station configuration for controlling overheating (or mitigating overheating of the electronic device 101). The base station configuration may include, for example, control information determined according to the type of overheating events that occur in the electronic device 101, or an overheating control operation (e.g., an NR CC reduction, an LTE FB, an LTE CC reduction, or a reduction in the number of reception (RX) antennas) configured by the base station 300 according to the type of overheating events of the electronic device 101.

According to an embodiment, self-overheating control operations of the electronic device 101 may include, for example, at least one of (i) a first operation of determining a channel quality indicator (CQI) of at least one cell (e.g., at least one secondary cell Scell) as "0" and transmitting the CQI determined as "0" to the base station 300, (ii) a second operation of controlling downlink communication to be performed with the number of antennas less than the number of RX antennas indicated by the base station 300, or (iii) a third operation of transmitting an SCG failure message (e.g., an scgFailurelnformationNR message), but are not limited thereto.

For example, in the NR NSA environment, the electronic device 101 is operable to detect event #2 and/or event #5 shown in Table 1 above. In this example, the electronic device 101 is operable to perform a self-overheating control operation (e.g., the first operation). In the NR NSA environment, the electronic device 101 is operable to detect event #3 shown in Table 1 above. In this case, the electronic device 101 is operable to perform a self-overheating control operation (e.g., the third operation). In the NR SA environment, the electronic device 101 is operable to detect event #2 shown in Table 1 above. In this case, the electronic device 101 is operable to perform a self-overheating control operation (e.g., the first operation). In the NR SA environment, the electronic device 101 is operable to detect event #3 shown in Table 1 above. In this case, the electronic device 101 is operable to perform a self-overheating control operation (e.g., the second operation).

According to an embodiment, the self-overheating control operations of the electronic device 101 may be classified, for example, into an operation performed together with a transmission of a UAI message, and an operation performed when a predetermined period of time (e.g., a period of time in which a first timer that will be described below is operated) has elapsed after the transmission of the UAI message. For example, a self-overheating control operation that may lead to a conflict with a UAI message transmitted to a network (or the base station 300), a self-overheating control operation that may result in additional signaling (e.g., signaling of a secondary cell group failure (SCGF) and measurement report) between the electronic device 101 and the network (or the base station 300), or a self-overheating control operation (e.g., the third operation described above) that may cause the network to recognize a reduction in performance of the electronic device 101, may be performed when a predetermined period of time elapses after the transmission of the UAI message. A self-overheating control operation (e.g., the first operation and the second operation described above) that may achieve the same purpose (e.g., a deactivation (or removal) of a secondary cell, and a reduction in the number of RX antennas) as that of an operation that may be expected from the network through the transmission of the UAI message, may be performed together with the transmission of the UAI message.

According to an embodiment, when detecting event #2 and/or event #5 shown in Table 1 above in the NR NSA environment, the electronic device 101 is operable to perform a self-overheating control operation (e.g., the first operation) along with the transmission of the UAI message. When detecting event #3 shown in Table 1 above in the NR NSA environment, the electronic device 101 is operable to wait to receive a response message (e.g., an RRC connection reconfiguration message) to the UAI message for a predetermined period of time (e.g., a period of time in which a first timer that will be described below is operated) from the base station 300. When failing to receive the response message to the UAI message from the base station 300 within the predetermined period of time (e.g., a period of time in which the first timer is operated), the electronic device 101 is operable to perform a self-overheating control operation (e.g., the third operation).

According to an embodiment, the electronic device 101 is operable to configure or generate a UAI message when detecting an overheating event. When the UAI message is received from the electronic device 101, the base station 300 is operable to perform a predetermined operation based on the UAI message. Examples of operations (e.g., configuration of a UAI message) of a base station and the electronic device 101 according to overheating events in the NR NSA environment are shown in Table 2 below.

**[Table 2]**

| Type of overheating (OH) event | Operation of base station | Situation matching overheating event | Operation of electronic device | |
|---|---|---|---|---|
| Event #1 | SCG OH recovery (e.g., NR Scell activation) using R16 after R16 Scell reduction | Release of NR CC drop | Not set R16 reducedMaxCCs | |
| | SCG recovery after SCG release using R16 | Release of LTE FB | Not set OH-v1610 | |
| Event #2 | R16 Scell reduction | NR CC drop | R16: reducedMaxCCs | |
| | | | | reducedCCsDL-r16:1 |
| | | | | reducedCCsUL-r16:1 |
| Event #3 | SCG OH recovery (e.g., LTE Scell activation) using R14 after R14 Scell reduction | Release of LTE CC drop | Not set R14 reducedMaxCCs | |
| | SCG release using | LTE FB | R16: reducedMaxCCs | |
| | R16 | | | reducedCCsDL-r16:0 |
| | | | | reducedCCsUL-r16:0 |
| Event #5 | R14 Scell reduction | LTE CC drop | R14: reducedMaxCCs | |
| | | | | reducedCCsDL:0 |
| | | | | reducedCCsUL:0 |

For example, when an overheating event (e.g., event #2 shown in Table 2 above) corresponding to NR CC drop occurs, the electronic device 101 is operable to generate a UAI message with reducedCCsDL-r16=1 and reducedCCsUL-r16=1 and transmit the generated UAI message to the base station 300.

For example, when an overheating event (e.g., event #3 shown in Table 2 above) corresponding to LTE FB occurs, the electronic device 101 is operable to generate a UAI message with reducedCCsDL-r16=0 and reducedCCsUL-r16=0 and transmit the generated UAI message to the base station.

For example, when an overheating event (e.g., event #5 shown in Table 2 above) corresponding to LTE CC drop occurs, the electronic device 101 is operable to generate a UAI message with reducedCCsDL=0 and reducedCCsUL=0 and transmit the generated UAI message to the base station.

According to an embodiment, in the NR NSA environment, the electronic device 101 is operable to configure one or more UAI messages for detected events. For example, when a self-overheating control operation for reducing the number of RX antennas is performed, the electronic device 101 is operable to configure a UAI message using a reducedMaxMIMO information element (IE) to receive a configuration of reducing the number of RX antennas of the electronic device 101 from the base station 300.

According to an embodiment, when detecting event #2 shown in Table 1 above in the NR SA environment, the electronic device 101 is operable to perform a self-overheating control operation (e.g., the first operation) along with a transmission of a UAI message. When detecting event #3 shown in Table 1 above in the NR SA environment, the electronic device 101 is operable to perform a self-overheating control operation (e.g., the second operation) along with a transmission of a UAI message.

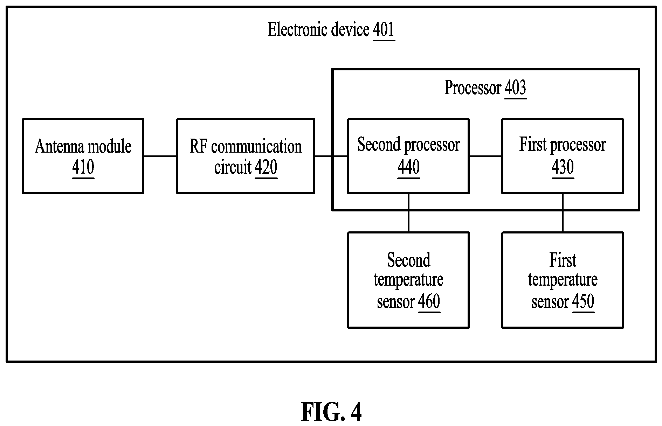

FIG. 4 is a block diagram illustrating an example of a configuration of an electronic device according to an embodiment.

Referring to FIG. 4, the electronic device 401 (e.g., the electronic device 101 of FIGS. 1 to 3) according to an embodiment may include an antenna module 410 (e.g., the antenna module 197 of FIG. 1), an RF communication circuit 420, a processor 403 (e.g., the processor 120 of FIG. 1), and a plurality of temperature sensors (e.g., one or more first temperature sensors 450, and one or more second temperature sensors 460).

According to an embodiment, the processor 403 may include a first processor 430, and a second processor 440. The first processor 430 may correspond to, for example, the main processor 121 of FIG. 1 or a central processing unit (CPU). The second processor 440 may correspond to, for example, the assistance processor 123 of FIG. 1 or a CP.

According to an embodiment, the RF communication circuit 420 of FIG. 4 may include, for example, the first RFIC 222 and the second RFFE 234 of FIG. 2. Depending on an implementation, the RF communication circuit 420 of FIG. 4 may include, for example, the (1-2)-th RFIC 222-2 and the second RFFE 234 of FIG. 2.

According to an embodiment, the antenna module 410 of FIG. 4 may include, for example, at least a portion of the first antenna module 242, the second antenna module 244, or the third antenna module 246 of FIG. 2.

According to an embodiment, the antenna module 410 may include at least one reception (RX) antenna used to communicate with a base station (e.g., the base station 300 of FIG. 3). For example, the electronic device 401 ma is operable to y perform downlink communication with the base station 300 through 2RX antennas or 4RX antennas of the antenna module 410.

According to an embodiment, the processor 403 may be operatively coupled to the RF communication circuit 420.

According to an embodiment, the one or more first temperature sensors 450 are operable to obtain a sensing value (or a temperature value) by sensing (or measuring) a temperature of a component (e.g., at least one of the antenna module 410, the RF communication circuit 420, or the first processor 430) in the electronic device 401. The one or more first temperature sensors 450 are operable to (periodically/non-periodically) transmit the obtained sensing value (or temperature value) to the first processor 430.

According to an embodiment, the one or more second temperature sensors 460 are operable to obtain a sensing value (or temperature value) by, for example, sensing (or measuring) a temperature of the second processor 440. The one or more second temperature sensors 460 are operable to (periodically/non-periodically) transmit the obtained sensing value (or temperature value) to the second processor 440 (or the first processor 430).

According to an embodiment, the processor 403 (e.g., the first processor 430) is operable to detect an overheating event of the electronic device 401. For example, the first processor 430 is operable to estimate (or calculate) a temperature (e.g., a surface temperature) of the electronic device 401 using the sensing value (or temperature value) received from the one or more first temperature sensors 450, and is operable to detect an overheating event based on the estimated temperature (e.g., surface temperature).

According to an embodiment, the processor 403 (e.g., the second processor 440) is operable to detect an overheating event of the electronic device 401. For example, the second processor 440 is operable to estimate (or calculate) a temperature (hereinafter, referred to as a "CP temperature") of the second processor 440 using the sensing value (or temperature value) received from the one or more second temperature sensors 460 and is operable to detect an overheating event based on the estimated CP temperature.

According to an embodiment, in an NR NSA environment, the processor 403 (e.g., the first processor 430 or the second processor 440) is operable to detect a first overheating event (e.g., event #2 in the NR NSA environment shown in Table 1 above) in the NR NSA environment occurring when a temperature of the electronic device 401 (e.g., any one or any combination of the estimated surface temperature and the estimated CP temperature) is higher than the temperature that triggers event #2 shown in Table 1 above and lower than the temperature that triggers event #3 shown in Table 1 above. In the NR NSA environment, the processor 403 (e.g., the first processor 430 or the second processor 440) is operable to detect a second overheating event (e.g., event #5 in the NR NSA environment shown in Table 1 above) in the NR NSA environment occurring when the temperature of the electronic device 401 (e.g., any one or any combination of the estimated surface temperature and the estimated CP temperature) is higher than the temperature that triggers event #5 shown in Table 1 above. In the NR NSA environment, the processor 403 (e.g., the first processor 430 or the second processor 440) is operable to detect a third overheating event (e.g., event #3 in the NR NSA environment shown in Table 1 above) in the NR NSA environment occurring when the temperature of the electronic device 401 (e.g., any one or any combination of the estimated surface temperature and the estimated CP temperature) is higher than the temperature that triggers event #3 shown in Table 1 above and lower than the temperature that triggers event #5 shown in Table 1 above.

According to an embodiment, in an NR SA environment, the processor 403 (e.g., the first processor 430 or the second processor 440) is operable to detect a first overheating event (e.g., event #2 in the NR SA environment shown in Table 1 above) in the NR SA environment occurring when the temperature of the electronic device 401 (e.g., any one or any combination of the estimated surface temperature and the estimated CP temperature) is higher than the temperature that triggers event #2 shown in Table 1 above and lower than the temperature that triggers event #3 shown in Table 1 above. In the NR SA environment, the processor 403 (e.g., the first processor 430 or the second processor 440) is operable to detect a second overheating event (e.g., event #3 in the NR SA environment shown in Table 1 above) in the NR SA environment occurring when the temperature of the electronic device 401 (e.g., any one or any combination of the estimated surface temperature and the estimated CP temperature) is higher than the temperature that triggers event #3 shown in Table 1 above and lower than the temperature that triggers event #4 shown in Table 1 above.

According to an embodiment, when an overheating event is detected (or occurs), the processor 403 (e.g., the second processor 440) is operable to transmit a UAI message that sets a preferred overheating control operation of the electronic device 401 to the base station (e.g., the base station 300 of FIG. 3). The second processor 440 is operable to transmit a UAI message to the base station 300 to receive a base station configuration for controlling overheating from the base station 300. When an overheating event is detected (or occurs), the processor 403 (e.g., the second processor 440) is operable to transmit a UAI message including information associated with a preference of the electronic device 401 for controlling overheating to the base station.

According to an embodiment, the processor 403 (e.g., the second processor 440) is operable to perform a self-overheating control operation (e.g., at least one of the first operation, the second operation, or the third operation described above) independent of the base station configuration (or base station instruction) for controlling overheating. The processor 403 (e.g., the second processor 440) is operable to perform a self-overheating control operation to prepare for a failure to receive a response message to the UAI message from the base station 300. The response message to the UAI message may include, for example, a base station configuration for controlling overheating.

According to an embodiment, the processor 403 (e.g., the second processor 440) is operable to perform a self-overheating control operation at different points of time according to the type of overheating events that are detected (or occur). In a case in which at least one control operation (e.g., at least one overheating control operation) corresponding to the preference of the electronic device 401 for controlling overheating includes a first predefined operation (e.g., an NR CC reduction, an LTE CC reduction, or a reduction in the number of RX antennas), the processor 403 (e.g., the second processor 440) is operable to initiate an operation (e.g., the first operation or the second operation described above) of causing the first predefined operation to be performed without waiting for a response (e.g., a response message to a UAI message) from the base station. In a case in which the at least one control operation corresponding to the preference of the electronic device 401 for controlling overheating includes a second predefined operation (e.g., an LTE FB), the processor 403 (e.g., the second processor 440) is operable to initiate an operation (e.g., the third operation described above) of causing the second predefined operation to be performed when a time period has elapsed after the transmitting of the UAI message.

For example, when the first overheating event and/or the second overheating event in the NR NSA environment is detected, the second processor 440 is operable to determine a CQI of at least one cell (e.g., a secondary cell) as "0" and transmit the CQI determined as "0" to the base station (e.g., an LTE base station). When the first overheating event and/or the second overheating event in the NR NSA environment is detected, the second processor 440 is operable to transmit UAI together with a report indicating that the CQI of the at least one cell (e.g., the secondary cell) is "0" to the base station (e.g., the LTE base station). When a third overheating event in the NR NSA environment is detected, the second processor 440 is operable to transmit a UAI message to the base station (e.g., the LTE base station) and operate a first timer. When failing to receive a response message to the UAI message from the base station (e.g., the LTE base station) while the first timer is operating, the second processor 440 is operable to transmit an SCG failure message to the base station (e.g., the LTE base station) such that the base station (e.g., the LTE base station) performs an NR release.

For example, when the first overheating event in the NR SA environment is detected, the second processor 440 is operable to determine a CQI of at least one cell (e.g., an NR secondary cell) as "0" and transmit the CQI determined as "0" to a base station (e.g., a 5G base station). When the first overheating event in the NR SA environment is detected, the second processor 440 is operable to transmit a UAI message together with a report indicating that the CQI of the at least one cell is "0" to the base station (e.g., the 5G base station). When the second overheating event in the NR SA environment is detected, the second processor 440 is operable to control the RF communication circuit 420 and/or the antenna module 410 to perform communication using the number of antennas less than the number of RX antennas set by the base station (e.g., the 5G base station). When the second overheating event in the NR SA environment is detected, the second processor 440 is operable to reduce the number of RX antennas along with the transmission of the UAI message.

According to an embodiment, the electronic device 401 may includes a memory (e.g., the memory 130 of FIG. 1) that stores instructions. When at least some or all of the instructions stored in the memory of the electronic device 401 are executed by the processor 403, the executed instructions are operable to cause the electronic device 401 to perform an operation (or an operation of the processor 403) of the electronic device 401 described with reference to FIG. 4.

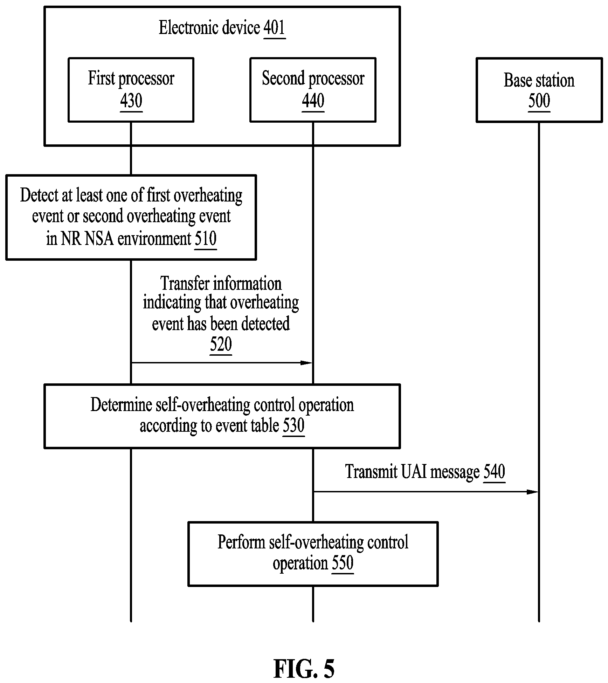

FIG. 5 is a flowchart illustrating an example in which an electronic device performs a self-overheating control operation when detecting at least one of a first overheating event or a second overheating event in an NR NSA environment, according to an embodiment.

Referring to FIG. 5, in operation 510, the electronic device 401 (e.g., the processor 403 or the first processor 430) may detect at least one of a first overheating event (e.g., event #2 in the NR NSA environment shown in Table 1 above) or a second overheating event (e.g., event #5 in the NR NSA environment shown in Table 1 above) in the NR NSA environment. The electronic device 401 (e.g., the processor 403 or the first processor 430) may detect at least one of the first overheating event or the second overheating event in the NR NSA environment based on the temperature (e.g., any one or any combination of the estimated surface temperature and the estimated CP temperature) of the electronic device 401.

In operation 520, the electronic device 401 (e.g., the processor 403 or the first processor 430) may transfer information indicating that an overheating event (e.g., at least one of the first overheating event or the second overheating event in the NR NSA environment) has been detected to the second processor 440.

In operation 530, the electronic device 401 (e.g., the first processor 430 and/or the second processor 440) may determine a self-overheating control operation according to an event table (e.g., Table 1 shown above). For example, when the first overheating event in the NR NSA environment is detected, the electronic device 401 (e.g., the first processor 430 and/or the second processor 440) may determine a self-overheating control operation (e.g., an operation of reporting a base station 500 that a CQI of at least one NR secondary cell is "0") to allow NR CC drop to be induced, according to the event table (e.g., Table 1 shown above). When the second overheating event in the NR NSA environment is detected, the electronic device 401 (e.g., the first processor 430 and/or the second processor 440) may determine a self-overheating control operation (e.g., an operation of reporting the base station 500 that a CQI of at least one LTE secondary cell is "0") to allow LTE CC drop to be induced, according to the event table (e.g., Table 1 shown above).

In operation 540, the electronic device 401 (e.g., the processor 403 or the second processor 440) may transmit a UAI message that sets a preferred overheating control operation (e.g., deactivation of a secondary cell) for a detected overheating event to the base station 500 (e.g., an LTE base station). To mitigate (or alleviate) an overheated state, the electronic device 401 may inform the base station 500 that deactivation of a secondary cell (e.g., an NR secondary cell or an LTE secondary cell) is preferred, through the UAI message.

For example, when the first overheating event in the NR NSA environment is detected, the electronic device 401 (e.g., the processor 403 or the second processor 440) may set each of a parameter (e.g., a reducedCCsDL-r16 parameter of 3GPP TS) related to the number of downlink CCs and a parameter (e.g., a reducedCCsUL-r16 parameter of 3GPP TS) related to the number of uplink CCs to a first value (e.g., "1") such that deactivation of an NR secondary cell (or reducing of NR cells) may be performed by the base station 500. The electronic device 401 (e.g., the processor 403 or the second processor 440) may generate a UAI message including the parameter (e.g., the reducedCCsDL-r16 parameter of 3GPP TS) related to the number of downlink CCs and set to the first value (e.g., "1") and the parameter (e.g., the reducedCCsUL-r16 parameter of 3GPP TS) related to the number of uplink CCs and set to the first value (e.g., "1") and may transmit the generated UAI message to the base station 500. When the first overheating event in the NR NSA environment occurs, the electronic device 401 (e.g., the processor 403 or the second processor 440) may transmit a UAI message including information (e.g., reducedCCsDL-r16 parameter = 1 and reducedCCsUL-r16 parameter = 1) associated with the preference of the electronic device 401 for controlling overheating to the base station 500.

For example, when the second overheating event in the NR NSA environment is detected, the electronic device 401 (e.g., the processor 403 or the second processor 440) may set each of a parameter (e.g., a reducedCCsDL parameter of 3GPP TS) related to the number of downlink CCs and a parameter (e.g., a reducedCCsUL parameter of 3GPP TS) related to the number of uplink CCs to a second value (e.g., "0") such that deactivation of an LTE secondary cell (or an LTE CC reduction) may be performed by the base station 500. The electronic device 401 (e.g., the processor 403 or the second processor 440) may generate a UAI message including the parameter (e.g., the reducedCCsDL parameter of 3GPP TS) related to the number of downlink CCs and set to the second value and the parameter (e.g., the reducedCCsUL parameter of 3GPP TS) related to the number of uplink CCs and set to the second value and may transmit the generated UAI message to the base station 500. When the second overheating event in the NR NSA environment occurs, the electronic device 401 (e.g., the processor 403 or the second processor 440) may transmit a UAI message including information (e.g., reducedCCsDL parameter = 0 and reducedCCsUL parameter = 0) associated with the preference of the electronic device 401 for controlling overheating to the base station 500.

In operation 550, the electronic device 401 (e.g., the processor 403 or the second processor 440) may perform a self-overheating control operation.

For example, when the first overheating event in the NR NSA environment is detected, the electronic device 401 (e.g., the processor 403 or the second processor 440) may determine a CQI of at least one NR secondary cell as "0" and may transmit a UAI message together with a report indicating that the CQI of the at least one NR secondary cell is "0" to the base station 500. The base station 500 may deactivate (or remove) the NR secondary cell with the CQI determined as "0." The electronic device 401 (e.g., the processor 403 or the second processor 440) may transmit a report indicating that a CQI of at least one NR secondary cell is "0" to the base station 500, to induce the base station 500 to deactivate (or remove) the at least one NR secondary cell. The electronic device 401 (e.g., the processor 403 or the second processor 440) may initiate (or perform) an operation (e.g., an operation of reporting the base station 500 that a CQI of at least one NR secondary cell is "0") of causing a first predefined operation (e.g., deactivation of at least one NR secondary cell) to be performed without waiting for a response from the base station 500. The electronic device 401 (e.g., the processor 403 or the second processor 440) may not perform a transmission and reception operation with the NR secondary cell with the CQI determined as "0" (or an NR secondary cell removed by the base station 500), to mitigate an overheated state.

For example, when the second overheating event in the NR NSA environment is detected, the electronic device 401 (e.g., the processor 403 or the second processor 440) may determine a CQI of at least one LTE secondary cell as "0" and may transmit a UAI message together with a report indicating that the CQI of the at least one LTE secondary cell is "0" to the base station 500. The base station 500 may deactivate (or remove) the LTE secondary cell with the CQI determined as "0." The electronic device 401 (e.g., the processor 403 or the second processor 440) may transmit a report indicating that a CQI of at least one LTE secondary cell is "0" to the base station 500, to induce the base station 500 to deactivate (or remove) the at least one LTE secondary cell. The electronic device 401 (e.g., the processor 403 or the second processor 440) may initiate (or perform) an operation (e.g., an operation of reporting the base station 500 that a CQI of at least one LTE secondary cell is "0") of causing a first predefined operation (e.g., deactivation of at least one LTE secondary cell) to be performed without waiting for a response from the base station 500. The electronic device 401 (e.g., the processor 403 or the second processor 440) may not perform a transmission and reception operation with the LTE secondary cell with the CQI determined as "0" (or an LTE secondary cell deactivated by the base station 500), to mitigate an overheated state.

According to an embodiment, the electronic device 401 may induce the base station 500 to deactivate (or remove) the NR secondary cell with the CQI of "0" through a self-overheating control operation, even when failing to receive a response message (e.g., an RRC connection reconfiguration message including a base station configuration for controlling overheating) to the UAI message from the base station 500, thereby achieving the same purpose as that of the UAI message.

According to an embodiment, the electronic device 401 may identify that the temperature of the electronic device 401 is lower than a temperature that triggers the first overheating event in the NR NSA environment. For example, the electronic device 401 may detect event #1 in the NR NSA environment shown in Table 1 above. In this example, the electronic device 401 may perform a self-overheating control release operation (e.g., an operation of not transmitting a report indicating that a CQI of at least one NR secondary cell is "0"). The electronic device 401 may not perform a self-overheating control operation according to the first overheating event in the NR NSA environment.

According to an embodiment, the electronic device 401 may identify that the temperature of the electronic device 401 is lower than a temperature that triggers the second overheating event in the NR NSA environment. For example, when the second overheating event in the NR NSA environment is detected and when the temperature of the electronic device 401 decreases, the electronic device 401 may detect event #3 in the NR NSA environment shown in Table 1 above. In this example, the electronic device 401 may perform a self-overheating control release operation (e.g., an operation of not transmitting a report indicating that a CQI of at least one LTE secondary cell is "0"). The electronic device 401 may not perform a self-overheating control operation according to the second overheating event in the NR NSA environment.

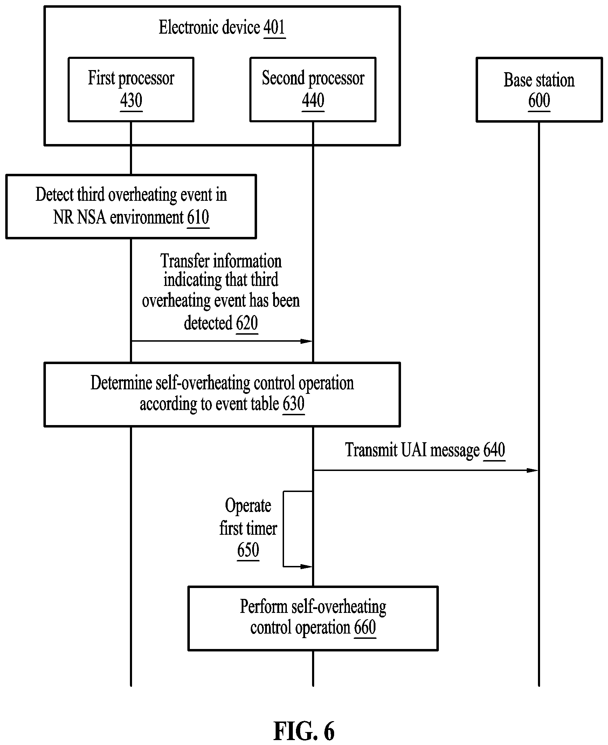

FIG. 6 is a flowchart illustrating an example in which an electronic device performs a self-overheating control operation when detecting a third overheating event in an NR NSA environment, according to an embodiment.

Referring to FIG. 6, in operation 610, the electronic device 401 (e.g., the processor 403 or the first processor 430) may detect a third overheating event in the NR NSA environment (e.g., event #3 in the NR NSA environment shown in Table 1 above). The electronic device 401 (e.g., the processor 403 or the first processor 430) may detect the third overheating event in the NR NSA environment based on the temperature (e.g., any one or any combination of the estimated surface temperature and the estimated CP temperature) of the electronic device 401.

In operation 620, the electronic device 401 (e.g., the first processor 430) may transfer information indicating that the third overheating event has been detected to the second processor 440.

In operation 630, the electronic device 401 (e.g., the first processor 430 and/or the second processor 440) may determine a self-overheating control operation according to an event table (e.g., Table 1 shown above). For example, when the third overheating event in the NR NSA environment is detected, the electronic device 401 (e.g., the first processor 430 and/or the second processor 440) may determine a self-overheating control operation (e.g., an operation of transmitting an SCG failure message to the base station 500) that allows LTE FB to be induced according to the event table (e.g., Table 1 shown above). When the electronic device 401 (e.g., the second processor 440) fails to receive a response message to the UAI message from the base station 500 while a first timer is operating, a self-overheating control operation may be performed, which will be described below. When the response message to the UAI message is received from the base station 500 while the first timer is operating, the electronic device 401 (e.g., the processor 403 or the second processor 440) may not perform a self-overheating control operation and may perform an overheating control operation based on the response message.

In operation 640, the electronic device 401 (e.g., the processor 403 or the second processor 440) may transmit a UAI message that sets a preferred overheating control operation (e.g., an SCG release) for the third overheating event to the base station 600 (e.g., an LTE base station).

For example, when the third overheating event in the NR NSA environment is detected, the electronic device 401 (e.g., the processor 403 or the second processor 440) may set each of a parameter (e.g., a reducedCCsDL-r16 parameter of 3GPP TS) related to the number of downlink CCs and a parameter (e.g., a reducedCCsUL-r16 parameter of 3GPP TS) related to the number of uplink CCs to a second value (e.g., "0") such that the SCG release (or LTE FB) may be performed by the base station 600. The electronic device 401 (e.g., the processor 403 or the second processor 440) may transmit a UAI message including the parameter (e.g., the reducedCCsDL-r16 parameter of 3GPP TS) related to the number of downlink CCs and set to the second value (e.g., "0") and the parameter (e.g., the reducedCCsUL-r16 parameter of 3GPP TS) related to the number of uplink CCs and set to the second value (e.g., "0") to the base station 600. When the third overheating event in the NR NSA environment occurs, the electronic device 401 (e.g., the processor 403 or the second processor 440) may transmit a UAI message including information (e.g., reducedCCsDL-r16 parameter = 0 and reducedCCsUL-r16 parameter = 0) associated with the preference of the electronic device 401 for controlling overheating control to the base station 600.

In operation 650, the electronic device 401 (e.g., the processor 403 or the second processor 440) may operate the first timer. The first timer may correspond to, for example, an amount of time in which the electronic device 401 expects to receive a response message to the UAI message from the base station 600 (or a network), or a minimum amount of time used until the electronic device 401 receives a response message to the UAI message from the network. The electronic device 401 (e.g., the processor 403 or the second processor 440) may set the first timer to a value that minimizes an amount of time in which the electronic device 401 remains in an overheated state, due to the absence of a response message from the base station 600 (or the network).

According to an embodiment, the electronic device 401 (e.g., the processor 403 or the second processor 440) may fail to receive a response message to the UAI message from the base station 600 (or the network) while the first timer is operating. In this case, in operation 660, the electronic device 401 (e.g., the processor 403 or the second processor 440) may perform a self-overheating control operation (e.g., a third operation). For example, the electronic device 401 (e.g., the processor 403 or the second processor 440) may transmit an SCG failure message (e.g., a scgFailurelnformationNR message of 3GPP TS) to the base station 600. When the SCG failure message is received from the electronic device 401, the base station 600 may perform the SCG release (or LTE FB). The electronic device 401 (e.g., the processor 403 or the second processor 440) may initiate (or perform) an operation (e.g., an operation of transmitting an SCG failure message to the base station 600) of causing a second predefined operation (e.g., SCG release (or LTE FB)) to be performed when a time period has elapsed (e.g., when the first timer expires). By the SCG release (or LTE FB), the electronic device 401 (e.g., the processor 403 or the second processor 440) may perform LTE communication instead of NR communication with the base station 600, to mitigate the overheated state.

According to an embodiment, the electronic device 401 (e.g., the processor 403 or the second processor 440) may identify that the temperature of the electronic device 401 is lower than a temperature that triggers the third overheating event in the NR NSA environment. For example, when the third overheating event in the NR NSA environment is detected and when the temperature of the electronic device 401 decreases, the electronic device 401 (e.g., the processor 403 or the second processor 440) may detect event #1 in the NR NSA environment shown in Table 1 above. In this example, the electronic device 401 (e.g., the processor 403 or the second processor 440) may perform a self-overheating control release operation (e.g., an operation of not transmitting an SCG failure message). The electronic device 401 (e.g., the processor 403 or the second processor 440) may not perform a self-overheating control operation (e.g., the third operation) according to the third overheating event in the NR NSA environment.

According to an embodiment, the electronic device 401 (e.g., the processor 403 or the second processor 440) may receive a response message to the UAI message from the base station 500 while the first timer is operating. In this case, the electronic device 401 (e.g., the processor 403 or the second processor 440) may perform an overheating control operation based on the received response message.

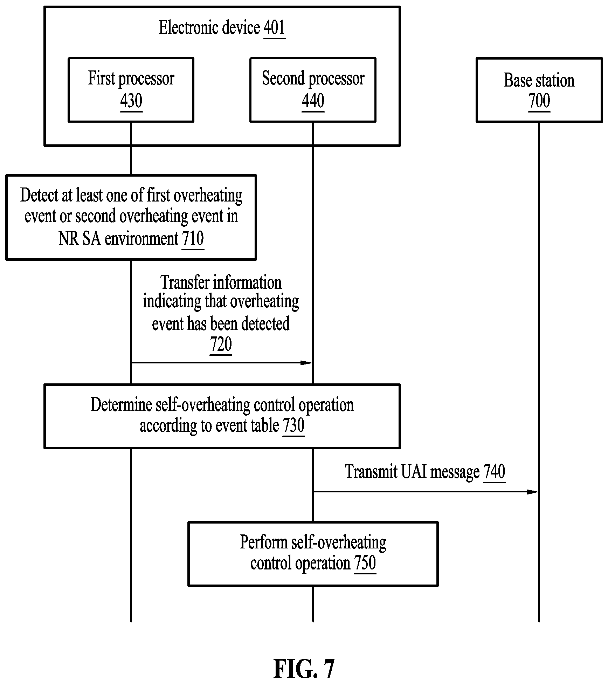

FIG. 7 is a flowchart illustrating an example in which an electronic device performs a self-overheating control operation when detecting at least one of a first overheating event or a second overheating event in an NR SA environment, according to an embodiment.

Referring to FIG. 7, in operation 710, the electronic device 401 (e.g., the processor 403 or the first processor 430) may detect at least one of a first overheating event (e.g., event #2 in the NR SA environment shown in Table 1 above) or a second overheating event (e.g., event #3 in the NR SA environment shown in Table 1 above) in the NR SA environment. The electronic device 401 (e.g., the processor 403 or the first processor 430) may detect at least one of the first overheating event or the second overheating event in the NR SA environment based on the temperature (e.g., any one or any combination of the estimated surface temperature and the estimated CP temperature) of the electronic device 401.

In operation 720, the electronic device 401 (e.g., the processor 403 or the first processor 430) may transfer information indicating that an overheating event (e.g., at least one of the first overheating event or the second overheating event in the NR SA environment) has been detected to the second processor 440.

In operation 730, the electronic device 401 (e.g., the first processor 430 and/or the second processor 440) may determine a self-overheating control operation according to an event table (e.g., Table 1 shown above). For example, when the first overheating event in the NR SA environment is detected, the first processor 430 and/or the second processor 440 may determine a self-overheating control operation (e.g., an operation of reporting a base station 700 that a CQI of at least one NR secondary cell is "0") to allow NR CC drop to be induced, according to the event table (e.g., Table 1 shown above). When the second overheating event in the NR SA environment is detected, the electronic device 401 (e.g., the first processor 430 and/or the second processor 440) may determine a self-overheating control operation for reducing the number of RX antennas.

In operation 740, the electronic device 401 (e.g., the processor 403 or the second processor 440) may transmit a UAI message that sets a preferred overheating control operation (e.g., deactivation of an NR secondary cell or using of antennas of 2RX during downlink communication) for a detected overheating event to the base station 700. When the first overheating event in the NR SA environment is detected, the electronic device 401 (e.g., the processor 403 or the second processor 440) may notify the base station 700 (e.g., an NR base station) that deactivation of an NR secondary cell is preferred, using the UAI message, to mitigate (or alleviate) an overheated state. When the first overheating event in the NR SA environment occurs, the electronic device 401 (e.g., the processor 403 or the second processor 440) may transmit a UAI message including information (e.g., reducedCCsDL-r16 parameter = 1 and reducedCCsUL-r16 parameter = 1) associated with the preference of the electronic device 401 for controlling overheating to the base station 700. When the second overheating event in the NR SA environment is detected, the second processor 440 may notify the base station 700 that reducing of the number of RX antennas (or layers) is preferred, using the UAI message, to mitigate (or alleviate) the overheated state. When the second overheating event in the NR SA environment occurs, the electronic device 401 (e.g., the processor 403 or the second processor 440) may transmit a UAI message including information (e.g., ReducedMaxMIMO_Layers_UL=2 and a UAI message including ReducedMaxMIMO_Layers_DL=1) associated with the preference of the electronic device 401 for controlling overheating to the base station 700.

In operation 750, the electronic device 401 (e.g., the processor 403 or the second processor 440) may perform a self-overheating control operation.

For example, when the first overheating event in the NR SA environment is detected, the electronic device 401 (e.g., the processor 403 or the second processor 440) may determine a CQI of at least one NR secondary cell as "0" and may transmit a UAI message together with a report indicating that the CQI of the at least one NR secondary cell is "0" to the base station 700. The base station 700 may deactivate (or remove) the NR secondary cell with the CQI determined as "0." The electronic device 401 (e.g., the processor 403 or the second processor 440) may transmit a report indicating that a CQI of at least one NR secondary cell is "0" to the base station 700, to induce the base station 700 to deactivate (or remove) the at least one NR secondary cell. The electronic device 401 (e.g., the processor 403 or the second processor 440) may initiate (or perform) an operation (e.g., an operation of reporting the base station 700 that a CQI of at least one NR secondary cell is "0") of causing a first predefined operation (e.g., deactivation of at least one NR secondary cell) to be performed, without waiting for a response from the base station 700. The electronic device 401 (e.g., the processor 403 or the second processor 440) may not perform a transmission and reception operation with the NR secondary cell with the CQI determined as "0" (or an NR secondary cell removed by the base station 700), to mitigate the overheated state.

For example, when the second overheating event in the NR SA environment is detected, the electronic device 401 (e.g., the processor 403 or the second processor 440) may control the number of RX antennas (e.g., "2") less than the number of RX antennas (e.g., "4") indicated by the base station 700 to be used. When the number of RX antennas of the electronic device 401 is reduced, an amount of current to be consumed may be reduced, to mitigate the overheated state.

According to an embodiment, when the first overheating event in the NR SA environment is detected, the electronic device 401 may induce the base station 700 to deactivate (or remove) the NR secondary cell with the CQI determined as "0" through a self-overheating control operation even when failing to receive a response message to a UAI message from the base station 700, to achieve the same purpose as that of the UAI message.

According to an embodiment, when the second overheating event in the NR SA environment is detected, the electronic device 401 may reduce the number of RX antennas through a self-overheating control operation even when failing to receive a response message to a UAI message from the base station 700, to achieve the same purpose as that of the UAI message.

According to an embodiment, the electronic device 401 may identify that the temperature of the electronic device 401 is lower than a temperature that triggers the first overheating event in the NR SA environment. For example, when the first overheating event in the NR SA environment is detected and when the temperature of the electronic device 401 decreases, the electronic device 401 may detect event #1 in the NR SA environment shown in Table 1 above. In this example, the electronic device 401 may perform a self-overheating control release operation (e.g., an operation of not transmitting a report indicating that a CQI of at least one NR secondary cell is "0"). The electronic device 401 may not perform a self-overheating control operation (e.g., a first operation) according to the first overheating event in the NR SA environment.

According to an embodiment, the electronic device 401 may identify that the temperature of the electronic device 401 is lower than a temperature that triggers the second overheating event in the NR SA environment. For example, when the second overheating event in the NR SA environment is detected and when the temperature of the electronic device 401 decreases, the electronic device 401 may detect event #1 in the NR SA environment shown in Table 1 above. In this example, the electronic device 401 may perform a self-overheating control release operation (e.g., an operation of changing the number of RX antennas of the electronic device 401 to the number of RX antennas indicated by the base station 700).

According to an embodiment, when an overheating event in the NR SA environment (e.g., the first overheating event and/or the second overheating event in the NR SA environment) is detected, the electronic device 401 may configure a UAI message by distinguishing FR1 (e.g., 410 MHz to 7.125 GHz) from FR2 (e.g., 24.25 GHz to 52.6 GHz) so that a MIMO layer control and/or bandwidth control may be performed. Examples of parameters for setting OverheatingAssistance in a UAI message are shown in Table 3 below.

**[Table 3**

| |
|---|
| ```
                OverheatingAssistance ::= SEQUENCE {
                reducedMaxCCs ReducedMaxCCs-r16 OPTIONAL,
                reducedMaxBW-FR1 ReducedMaxBW-FRx-r16 OPTIONAL,
                reducedMaxBW-FR2 ReducedMaxBW-FRx-r16 OPTIONAL,
                reducedMaxMIMO-LayersFR1 SEQUENCE {
                reducedMIMO-LayersFR1-DL MIMO-LayersDL,
                reducedMIMO-LayersFR1-UL MIMO-LayersUL
                } OPTIONAL,
                reducedMaxMIMO-LayersFR2 SEQUENCE {
                reducedMIMO-LayersFR2-DL MIMO-LayersDL,
                reducedMIMO-LayersFR2-UL MIMO-LayersUL }
 
``` |

In Table 3, reducedMaxBW-FR1 may indicate, for example, the maximum frequency band preferred by the electronic device 401 in FR1, and reducedMaxMIMO-LayersFR1 may indicate, for example, the maximum number of MIMO layers preferred by the electronic device 401 in FR1. In addition, reducedMaxMIMO-LayersFR1 may be divided into DL and UL. reducedMaxBW-FR2 may indicate, for example, the maximum frequency band preferred by the electronic device 401 in FR2, and reducedMaxMIMO-LayersFR2 may indicate, for example, the maximum number of MIMO layers preferred by the electronic device 401 in FR2. In addition, reducedMaxMIMO-LayersFR2 may be divided into DL and UL.

According to an embodiment, the electronic device 401 is operable to detect the second overheating event in the NR SA environment while performing communication with the base station 700 in FR1. When the second overheating event in the NR SA environment is detected, the electronic device 401 is operable to set reducedMaxBW-FR1 of the 3GPP TS and/or reducedMaxMIMO-LayersFR1 of 3GPP TS (e.g., reducedMIMO-LayersFR1-DL of 3GPP TS and reducedMIMO- LayersFR1-UL of 3GPP TS). The electronic device 401 is operable to transmit a UAI message including the set reducedMaxBW-FR1 and/or the set reducedMaxMIMO-LayersFR1 to the base station 700. The electronic device 401 may perform a self-overheating control operation (e.g., a second operation) according to the second overheating event in the NR SA environment along with the transmission of the UAI message.

According to an embodiment, the electronic device 401 is operable to detect the second overheating event in the NR SA environment while performing communication with the base station 700 in FR2. When the second overheating event in the NR SA environment is detected, the electronic device 401 may set reducedMaxBW-FR2 of 3GPP TS and/or reducedMaxMIMO-LayersFR2 of 3GPP TS (e.g., reducedMIMO-LayersFR2-DL of 3GPP TS and reducedMIMO- LayersFR2-UL of 3GPP TS). The electronic device 401 is operable to transmit a UAI message including the set reducedMaxBW-FR2 and/or the set reducedMaxMIMO-LayersFR2 to the base station 700. The electronic device 401 may perform a self-overheating control operation (e.g., a second operation) according to the second overheating event in the NR SA environment along with the transmission of the UAI message.

According to an embodiment, the electronic device 401 is operable to detect the second overheating event in the NR SA environment while performing communication with the base station 700 in FR1 and FR2. When the second overheating event is detected, the electronic device 401 is operable to set reducedMaxBW-FR1 and reducedMaxBW-FR2 and/or set reducedMaxMIMO-LayersFR1 and reducedMaxMIMO-LayersFR2. The electronic device 401 is operable to transmit a UAI message including the set reducedMaxBW-FR1 and reducedMaxBW-FR2 and/or the set reducedMaxMIMO-LayersFR1 and reducedMaxMIMO-LayersFR2 to the base station 700. The electronic device 401 is operable to perform a self-overheating control operation (e.g., a second operation) according to the second overheating event in the NR SA environment along with the transmission of the UAI message.

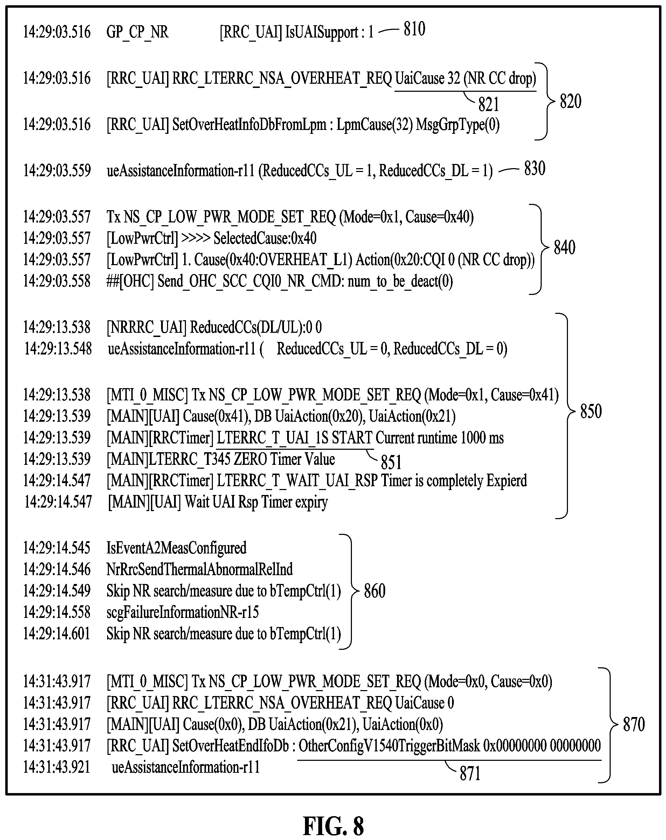

FIG. 8 is a diagram illustrating an example of log associated with an operation of an electronic device when an overheating event occurs in the electronic device according to an embodiment.

Referring to log 810 of FIG. 8, the electronic device 401 is operable to determine that UAI is supported when IsUAISupport is "1."

Referring to log 820, a low power mode (LPM) cause (or a UAI cause) (e.g., NR CC drop 821) may occur in EN-DC. For example, when a first overheating event in an NR NSA environment occurs, an LPM cause (or a UAI cause) (e.g., NR CC drop 821) may occur. The electronic device 401 may perform a UAI action (e.g., configuration of a UAI message) that matches the LPM cause (or the UAI cause). Examples of a UAI action matching each LPM cause are shown in Table 4 below.

**[Table 4]**

| Network (NW) mode | LPM cause | UAI action |
|---|---|---|
| All | RRC_LOWPWRCTRL_ACT ION_0 | OtherConfigV1540 Reset ('0') |
| | (LPM OFF) | |
| NRRRCDB_NROPMODE_ ENDC | RRC_LOWPWRCTRL_ACT ION_1 | ReducedCCs_UL = 0 |
| | | ReducedCCs_DL = 0 |
| | (LTE FB) | |
| | RRC_LOWPWRCTRL_ACT ION_6 | ReducedCCs_UL = 1 |
| | (NR CC drop) | ReducedCCs_DL = 1 |
| NRRRCDB_NROPMODE_ NRSA | RRC_LOWPWRCTRL_ACT ION_6 | ReducedCCs_UL = 1 |
| | (NR CC drop) | ReducedCCs_DL = 1 |
| | RRC_LOWPWRCTRL_ACT ION_4 | ReducedMaxMIMO_Layers _UL=2 |
| | (2RX limit) | ReducedMaxMIMO_Layers _DL=1 |

Each of ReducedMaxMIMO_Layers_UL and ReducedMaxMIMO_Layers_DL shown in Table 4 above may represent, for example, a parameter related to the number of MIMO layers in UL and a parameter related to the number of MIMO layers in DL. A value that may be is set for each of ReducedMaxMIMO_Layers_UL and ReducedMaxMIMO_Layers_DL is shown in Table 5 below, for example.

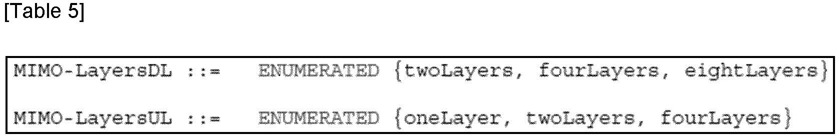

When an LPM cause corresponding to 2RX limit shown in Table 4 above occurs, the electronic device 401 is operable to configure a UAI message with ReducedMaxMIMO_Layers_UL=2 and ReducedMaxMIMO_Layers_DL=1. ReducedMaxMIMO_Layers_UL=2 may correspond, for example, to the twoLayers of the MIMO-LayersUL as shown in Table 5 above, and ReducedMaxMIMO_Layers_UL=2 may indicate that the number of UL MIMO layers is "2". ReducedMaxMIMO_Layers_DL=1 may correspond, for example, to the twoLayers of the MIMO-LayersDL as shown in Table 5 above, and ReducedMaxMIMO_Layers_DL=1 may indicate, for example, that the number of DL MIMO layers is "2".

Referring to log 830, the electronic device 401 is operable to transmit a UAI message (e.g., a UAI message with ReducedCCs_UL = 1 and ReducedCCs_DL = 1) that matches an LPM cause (or a UAI cause) (e.g., RRC_LOWPWRCTRL_ACTION_6 (NR CC drop) in NRRRCDB_NROPMODE_ENDC shown in Table 4 above) to a base station.

Referring to log 840, the electronic device 401 is operable to perform a self-LPM operation (e.g., a self-overheating control operation) along with the transmission of the UAI message. For example, the electronic device 401 is operable to transmit a report indicating that a CQI of at least one NR secondary cell is "0" to the base station.

Depending on embodiments, an LPM cause of LTE FB may occur. Referring to log 850, the electronic device 401 is operable to transmit a UAI message (e.g., a UAI message with ReducedCCs_UL = 0 and ReducedCCs_DL = 0) to the base station. The electronic device 401 may wait "N" seconds after transmitting the UAI message. The electronic device 401 may operate a first timer with a time value of "N" seconds. Referring to numeral 851, in the example shown in FIG. 8, N=1.

The electronic device 401 may fail to receive a response to a UAI message (e.g., a UAI message with ReducedCCs_UL = 0 and ReducedCCs_DL = 0) from the base station while waiting "N" seconds. In this case, referring to log 860, the electronic device 401 is operable to transmit an SGC failure message (e.g., scgFailurelnformationNR-r15) to the base station.

Referring to log 870, the LPM cause may be resolved. For example, when the temperature of the electronic device 401 decreases, LPM OFF (or event #1 shown in Table 1 above) shown in Table 4 above may occur. In this example, the electronic device 401 may initialize OverheatingAssistanceConfig to "0" as indicated by reference numeral 871.

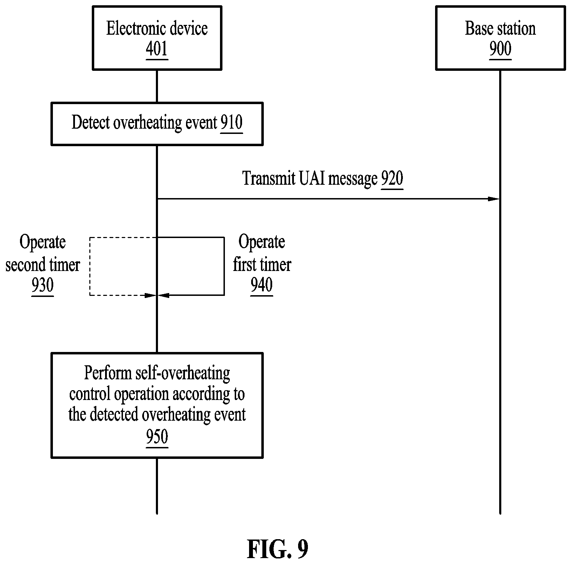

FIG. 9 is a flowchart illustrating an example of an operation of a first timer of an electronic device according to an embodiment.

Referring to FIG. 9, in operation 910, the electronic device 401 is operable to detect an overheating event (e.g., a first overheating event in an NR NSA environment, a second overheating event in the NR NSA environment, a third overheating event in the NR NSA environment, a first overheating event in an NA SA environment, or a second overheating event in the NR SA environment).

In operation 920, the electronic device 401 is operable to transmit a UAI message that sets a preferred overheating control operation for the detected overheating event to a base station 900 (e.g., the base station 300 of FIG. 3, the base station 500 of FIG. 5, or the base station 700 of FIG. 7).

When transmitting the UAI message, the electronic device 401 may operate a second timer (e.g., a T345 timer of 3GPP TS) associated with an overheating indication prohibition in operation 930 and may operate the first timer in operation 940. The first timer may have a time value corresponding to the detected overheating event. The time value of the first timer may vary depending on, for example, the type of overheating events.

For example, time values respectively corresponding to the first overheating event to the third overheating event in the NR NSA environment may be a first time value, a second time value, and a third time value, respectively. The time values respectively corresponding to the first overheating event and the second overheating event in the NR SA environment may be a fourth time value and a fifth time value, respectively. When the electronic device 401 detects the first overheating event in the NR NSA environment in operation 910, the electronic device 401 may operate the first timer for the first time value in operation 940. When the electronic device 401 detects the first overheating event in the NR SA environment in operation 910, the electronic device 401 may operate the first timer for the fourth time value in operation 940.

Depending on embodiments, the first time value to the fifth time value may be different from each other, or at least some of the first time value to the fifth time values may be identical to each other.

In the example shown in FIG. 9, the time value of the first timer is the same as the time value of the second timer, however, this is merely an example. The time value of the first timer may be less than or greater than the time value of the second timer.

When an overheating event other than the overheating event detected in operation 910 is detected while the second timer is operating, the electronic device 401 may not transmit a UAI message according to the other detected overheating event to the base station 900.

When failing to receive a response message (e.g., a message including a base station configuration for controlling overheating) to the UAI message from the base station 900 (or a network) while the first timer is operating, the electronic device 401 may perform a self-overheating control operation (e.g., a first operation, a second operation, or a third operation) according to the detected overheating event in operation 950.

According to an embodiment, for a self-overheating control of LTE FB, sequential signaling between the electronic device 401 and the base station 900 may be necessary. To prevent a collision of signaling, the electronic device 401 may transmit a UAI message to the base station 900 and wait for a response from the base station 900 using the first timer after transmitting the UAI message. When a response is not received from the base station 900 while the first timer is operating, the electronic device 401 may perform a self-overheating control operation.

When at least some or all of instructions stored in the memory of the electronic device 401 are executed by the processor 403, the executed instructions may cause the electronic device 401 to perform the operations of the electronic device 401 described with reference to FIG. 9.

The embodiments described with reference to FIGS. 1 to 8 may apply to the embodiments of FIG. 9.

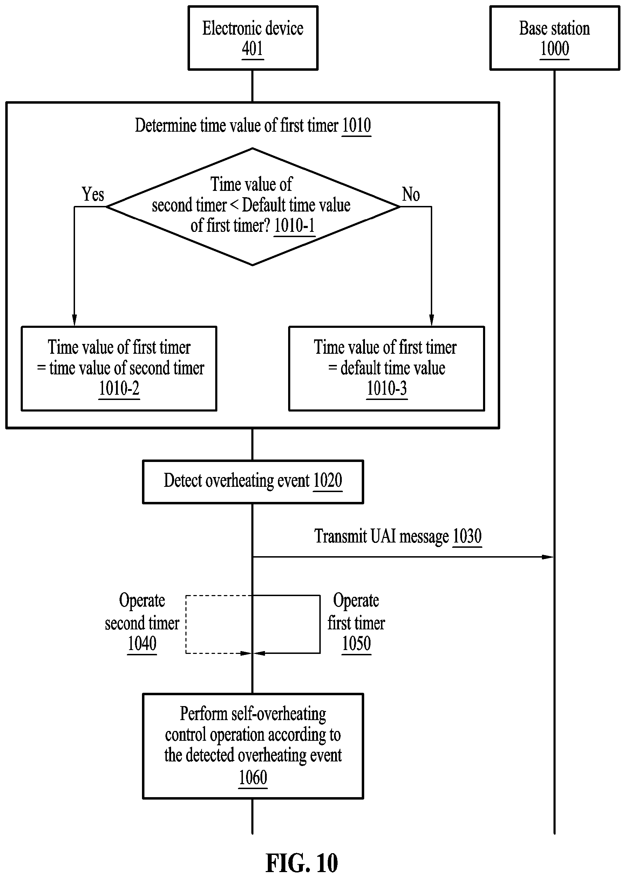

FIG. 10 is a flowchart illustrating another example of an operation of a first timer of an electronic device according to an embodiment.

Referring to FIG. 10, in operation 1010, the electronic device 401 may determine a time value of the first timer. For example, in operation 1010-1, the electronic device 401 may determine whether a time value of a second timer is less than a default time value of the first timer. When it is determined that the time value of the second timer is greater than or equal to the default time value of the first timer (No in operation 1010-1), the electronic device 401 may maintain the default time value of the first timer in operation 1010-3. The time value of the first timer may be equal to the default time value of the first timer. When it is determined that the time value of the second timer is less than the default time value of the first timer (Yes in operation 1010-1), the electronic device 401 may change the time value of the first timer from the default time value to the time value of the second timer in operation 1010-2. The time value of the first timer may be equal to the time value of the second timer.

In operation 1020, the electronic device 401 may detect an overheating event (e.g., a first overheating event in an NR NSA environment, a second overheating event in the NR NSA environment, a third overheating event in the NR NSA environment, a first overheating event in an NA SA environment, or a second overheating event in the NR SA environment).

In operation 1030, the electronic device 401 may transmit a UAI message that sets a preferred overheating control operation for a detected overheating event to a base station 1000 (e.g., the base station 300 of FIG. 3, the base station 500 of FIG. 5, or the base station 700 of FIG. 7).

When transmitting the UAI message, the electronic device 401 may operate the second timer in operation 1040 and operate the first timer in operation 1050. The electronic device 401 may operate the first timer for the time value (e.g., the default time value or the time value of the second timer) determined in operation 1010.

When failing to receive a response message (e.g., a message including a base station configuration for controlling overheating) to the UAI message from the base station 1000 (or a network) while the first timer is operating, the electronic device 401 may perform a self-overheating control operation (e.g., a first operation, a second operation, or a third operation) according to the detected overheating event in operation 1060.

When at least some or all of the instructions stored in the memory of the electronic device 401 are executed by the processor 403, the executed instructions may cause the electronic device 401 to perform the operations of the electronic device 401 described with reference to FIG. 10.

The embodiments described with reference to FIGS. 1 to 9 may apply to the embodiments of FIG. 10.

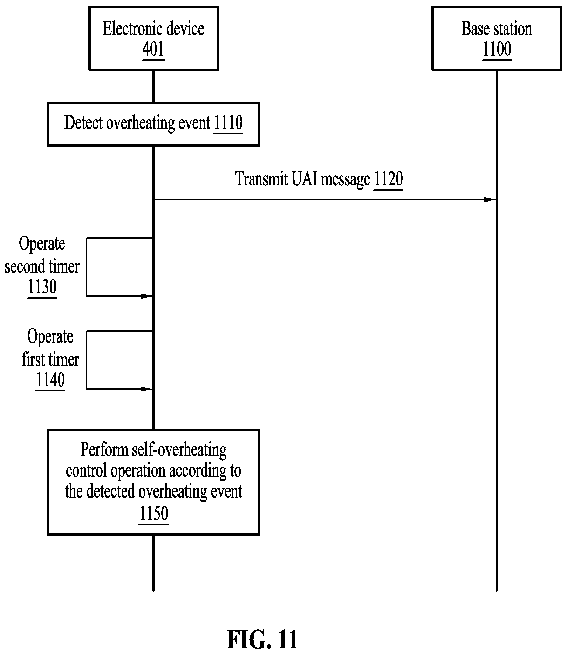

FIG. 11 is a flowchart illustrating another example of an operation of a first timer of an electronic device according to an embodiment.

Referring to FIG. 11, in operation 1110, the electronic device 401 may detect an overheating event (e.g., a first overheating event in an NR NSA environment, a second overheating event in the NR NSA environment, a third overheating event in the NR NSA environment, a first overheating event in an NA SA environment, or a second overheating event in the NR SA environment).

In operation 1120, the electronic device 401 may transmit a UAI message that sets a preferred overheating control operation for the detected overheating event to a base station 1100 (e.g., the base station 300 of FIG. 3, the base station 500 of FIG. 5, or the base station 700 of FIG. 7).

When transmitting the UAI message, the electronic device 401 may drive a second timer in operation 1130.

When the second timer expires, the electronic device 401 may operate the first timer in operation 1140. The first timer may have, for example, a time value corresponding to a detected overheating event as described above with reference to FIG. 9, or a time value (e.g., the default time value or the time value of the second timer) determined through a comparison between the time value of the second timer and the default time value of the first timer as described above with reference to 10.

When failing to receive a response message (e.g., a message including a base station configuration for controlling overheating) to the UAI message from the base station 1100 (or a network) while the first timer is operating, the electronic device 401 is operable to perform a self-overheating control operation (e.g., a first operation, a second operation, or a third operation) according to the overheating event detected in operation 1110, in operation 1150.

According to an embodiment, when detecting an overheating event after the second timer expires, the electronic device 401 is operable to retransmit the UAI message. When failing to detect an overheating event after the second timer expires, the electronic device 401 may operate the first timer. When the second timer is not operated due to a failure to receive a response message to the UAI message while the first timer is operating and a failure to detect another overheating event, the electronic device 401 is operable to perform a self-overheating control operation (e.g., a first operation, a second operation, or a third operation) according to the overheating event detected in operation 1110.

When at least some or all of the instructions stored in the memory of the electronic device 401 are executed by the processor 403, the executed instructions may cause the electronic device 401 to perform the operations of the electronic device 401 described with reference to FIG. 11.

The embodiments described with reference to FIGS. 1 to 10 may apply to the embodiments of FIG. 11.

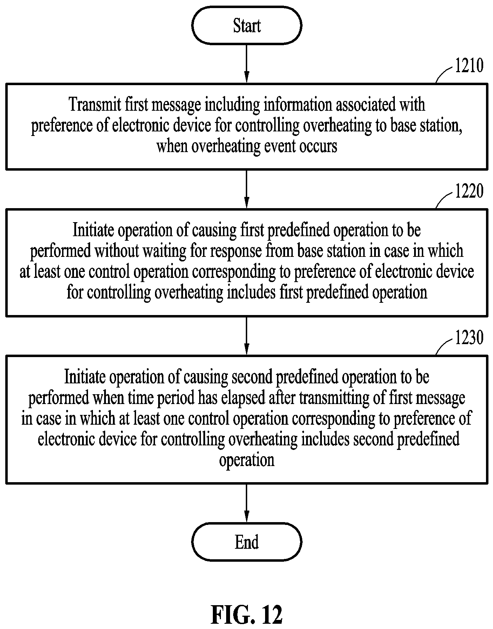

FIG. 12 is a flowchart illustrating an example of a method of operating an electronic device according to an embodiment.

Referring to FIG. 12, in operation 1210, an electronic device (e.g., the electronic device 101 of FIG. 1, the electronic device 301 of FIG. 3, and the electronic device 401 of FIG. 4) is operable to transmit a first message (e.g., a UAI message) including information associated with a preference of the electronic device for controlling overheating to a base station, when an overheating event occurs.

In operation 1220, the electronic device may initiate an operation of causing a first predefined operation to be performed without waiting for a response from the base station in a case in which at least one control operation corresponding to the preference of the electronic device for controlling overheating includes the first predefined operation.

The operation of causing the first predefined operation to be performed may include, for example, an operation of the electronic device to determine a CQl of at least one secondary cell as "0" and transmit the CQI determined as "0" to the base station.

In operation 1230, the electronic device may initiate an operation of causing a second predefined operation (e.g., an operation associated with an SCG release) to be performed when a time period has elapsed after the transmitting of the first message, in a case in which at least one control operation corresponding to the preference of the electronic device for controlling overheating includes the second predefined operation.

The operation of causing the second predefined operation to be performed may include, for example, an operation of the electronic device to transmit an SCG failure message to the base station.

According to an embodiment, the electronic device may communicate with a base station (e.g., an LTE base station and/or a 5G base station) in an NR NSA environment. For example, when a first overheating event in the NR NSA environment occurs, the electronic device may determine a CQl of at least one NR secondary cell as "0" and transmit the CQI determined as "0" together with the first message to the base station in operation 1220. For example, when a second overheating event in the NR NSA environment occurs, the electronic device may determine a CQI of at least one LTE secondary cell as "0" and transmit the CQI determined as "0" together with the first message to the base station in operation 1220. For example, when a third overheating event in the NR NSA environment occurs, the electronic device may operate a first timer in response to the transmitting of the first message, and may transmit an SCG failure message to the base station in response to a failure to receive a response to the first message from the base station while the first timer is operating, in operation 1230.

According to an embodiment, the electronic device is operable to communicate with a base station (e.g., a 5G base station) in an NR SA environment. For example, when the first overheating event in the NR SA environment occurs, the electronic device is operable to determine a CQI of at least one NR secondary cell as "0" and transmit the CQI determined as "0" together with the first message to the base station in operation 1220. For example, when a second overheating event in the NR SA environment occurs, the electronic device is operable to perform downlink communication with the number of antennas less than the number of RX antennas indicated by the base station in operation 1220.

According to an embodiment, when transmitting the first message, the electronic device may operate the first timer with a time value according to the type of overheating events and a second timer associated with an overheating indication prohibition. When failing to receive a response to the first message from the base station while the first timer is operating, the electronic device is operable to initiate an operation (e.g., perform a transmission of an SGG failure message) of causing the second predefined operation to be performed.

According to an embodiment, the electronic device is operable to determine whether the time value of the second timer is less than a default time value of the first timer. When it is determined that the time value of the second timer is greater than or equal to the default time value of the first timer, the electronic device is operable to maintain the default time value of the first timer. When it is determined that the time value of the second timer is less than the default time value, the electronic device is operable to change the time value of the first timer from the default time value to the time value of the second timer. When transmitting the first message, the electronic device may operate the first timer and the second timer. When failing to receive a response to the first message from the base station while the first timer is operating, the electronic device may initiate an operation (e.g., perform a transmission of an SGG failure message) of causing the second predefined operation to be performed.

According to an embodiment, when transmitting the first message, the electronic device may operate the second timer. When the second timer expires, the electronic device may operate the first timer. When failing to receive a response to the first message from the base station while the first timer is operating, the electronic device may initiate an operation (e.g., perform a transmission of an SGG failure message) of causing the second predefined operation to be performed.

The embodiments described with reference to FIGS. 1 to 11 may apply to the embodiments of FIG. 12.

According to an embodiment, an electronic device (101; 301; 401) may include an antenna module (410) including one or more antennas, an RF communication circuit (420) connected to the antenna module, a processor (120; 403) operatively coupled to the RF communication circuit, and memory (130) configured to store instructions. The instructions, when executed by the processor, may cause the electronic device to, when an overheating event occurs, transmit, to a base station, a first message including information associated with a preference of the electronic device for controlling overheating. The instructions, when executed by the processor, may cause the electronic device to, in a case in which at least one control operation corresponding to the preference of the electronic device includes a first predefined operation, initiate an operation of causing the first predefined operation to be performed without waiting for a response from the base station. The instructions, when executed by the processor, may cause the electronic device to, in a case in which at least one control operation corresponding to the preference of the electronic device includes a second predefined operation, initiate an operation of causing the second predefined operation to be performed when a time period has elapsed after the transmitting of the first message.

The operation of causing the first predefined operation to be performed may include an operation of determining a CQI of at least one secondary cell as "0" and transmitting the CQI determined as "0" to the base station.

The operation of causing the second predefined operation to be performed may include an operation of transmitting an SCG failure message to the base station.

The first predefined operation may include an operation associated with deactivation of at least one secondary cell, and the second predefined operation may include an operation associated with an SCG release.

The initiating of the operation of causing the first predefined operation to be performed may include, when a first overheating event occurs in an NR NSA environment, determining a CQI of at least one NR secondary cell as "0" and transmitting the CQI determined as "0" together with the first message to the base station.

The initiating of the operation of causing the first predefined operation to be performed may include, when a second overheating event occurs in an NR NSA environment, determining a CQI of at least one LTE secondary cell as "0" and transmitting the CQI determined as "0" together with the first message to the base station.

The initiating of the operation of causing the second predefined operation to be performed may include, when a third overheating event occurs in an NR NSA environment, operating a first timer in response to the transmitting of the first message; and transmitting an SCG failure message to the base station, in response to a failure to receive a response to the first message from the base station while the first timer is operating.

The initiating of the operation of causing the first predefined operation to be performed may include, when a first overheating event occurs in an NR SA environment, determining a CQI of at least one NR secondary cell as "0" and transmitting the CQI determined as "0" together with the first message to the base station.

The instructions, when executed by the processor, may cause the electronic device to, when a second overheating event occurs in an NR SA environment, perform a downlink communication with a number of antennas less than a number of RX antennas indicated by the base station.

The instructions, when executed by the processor, may cause the electronic device to, when the first message is transmitted, operate a first timer having a time value according to a type of the overheating event and a second timer associated with an overheating indication prohibition; and initiate the operation of causing the second predefined operation to be performed in response to a failure to receive the response while the first timer is operating.

The instructions, when executed by the processor, may cause the electronic device to: determine whether a time value of a second timer associated with an overheating indication prohibition is less than a default time value of a first timer; when it is determined that the time value of the second timer is greater than or equal to the default time value, maintain the default time value of the first timer; when it is determined that the time value of the second timer is less than the default time value, change a time value of the first timer from the default time value to the time value of the second timer; when the first message is transmitted, operate the first timer and the second timer; and initiate the operation of causing the second predefined operation to be performed in response to a failure to receive the response to the first message from the base station while the first timer is operating.

The instructions, when executed by the processor, may cause the electronic device to: when the first message is transmitted, operate a second timer associated with an overheating indication prohibition; when the second timer expires, operate a first timer; and initiate the operation of causing the second predefined operation to be performed in response to a failure to receive the response to the first message from the base station while the first timer is operating.

According to an embodiment, an electronic device (101; 301; 401) may include an antenna module (410) including one or more antennas, an RF communication circuit (420) connected to the antenna module, a processor (120; 403) operatively coupled to the RF communication circuit, and memory (130) configured to store instructions. The instructions, when executed by the processor, may cause the electronic device to, when an overheating event occurs, transmit, to a base station, a first message including information associated with a preference of the electronic device for controlling overheating. The instructions, when executed by the processor, may cause the electronic device to, in a case in which at least one control operation corresponding to the preference of the electronic device includes a first predefined operation, perform an overheating control operation of causing the first predefined operation to be performed without waiting for a response from the base station. The instructions, when executed by the processor, may cause the electronic device to, in a case in which at least one control operation corresponding to the preference of the electronic device includes a second predefined operation, perform an overheating control operation of causing the second predefined operation to be performed when a time period has elapsed after the transmitting of the first message.

The overheating control operation of causing the first predefined operation to be performed may include an operation of determining a CQI of at least one secondary cell as "0" and transmitting the CQI determined as "0" to the base station.

The overheating control operation of causing the second predefined operation to be performed may include an operation of transmitting an SCG failure message to the base station.

The performing of the overheating control operation of causing the first predefined operation to be performed may include, when a first overheating event occurs in an NR NSA environment, determining a CQI of at least one NR secondary cell as "0" and transmitting the CQI determined as "0" together with the first message to the base station. The performing of the overheating control operation of causing the first predefined operation to be performed may include, when a second overheating event is detected in an NR NSA environment, determining a CQI of at least one LTE secondary cell as "0" and transmitting the CQI determined as "0" together with the first message to the base station.

The performing of the overheating control operation of causing the second predefined operation to be performed may include, when a third overheating event occurs in an NR NSA environment, operating a first timer in response to the transmitting of the first message; and transmitting an SCG failure message to the base station, in response to a failure to receive the response from the base station while the first timer is operating.

The performing of the overheating control operation of causing the first predefined operation to be performed may include, when a first overheating event occurs in an NR SA environment, determining a CQI of at least one NR secondary cell as "0" and transmitting the CQI determined as "0" together with the first message to the base station.

The instructions, when executed by the processor, may cause the electronic device to, when a second overheating event is detected in an NR SA environment, perform a downlink communication with a number of antennas less than a number of RX antennas indicated by the base station.

According to an embodiment, a method of operating an electronic device (101; 301; 401) may include: when an overheating event occurs, transmitting, to a base station, a first message including information associated with a preference of the electronic device for controlling overheating; in a case in which at least one control operation corresponding to the preference of the electronic device includes a first predefined operation, initiating an operation of causing the first predefined operation to be performed without waiting for a response from the base station; and in a case in which at least one control operation corresponding to the preference of the electronic device includes a second predefined operation, initiating an operation of causing the second predefined operation to be performed when a time period has elapsed after the transmitting of the first message.

According to an embodiment, an electronic device (101; 301; 401) may include an antenna module (410) including one or more antennas, an RF communication circuit (420) connected to the antenna module, a processor (120; 403) operatively coupled to the RF communication circuit, and memory (130) configured to store instructions. The instructions, when executed by the processor, may cause the electronic device to, when an overheating event occurs, generate a UAI message including information associated with a preference of the electronic device for controlling overheating. The instructions, when executed by the processor, may cause the electronic device to perform a self-overheating control operation independent of a base station configuration for controlling overheating. The self-overheating control operation may include a self-overheating control operation performed without waiting for a message including a base station configuration, or a self-overheating control operation performed in response to a failure to receive a message including a base station configuration from the base station.

## Claims

1. An electronic device (101; 301; 401), comprising:
an antenna module (410) comprising one or more antennas;
a radio frequency (RF) communication circuit (420) connected to the antenna module;
a processor (120; 403) operatively coupled to the RF communication circuit; and
memory (130) configured to store instructions,
wherein the instructions, when executed by the processor, cause the electronic device to:
when an overheating event occurs, transmit, to a base station, a first message comprising information associated with a preference of the electronic device for controlling overheating;
in a case in which at least one control operation corresponding to the preference of the electronic device comprises a first predefined operation, initiate an operation of causing the first predefined operation to be performed without waiting for a response from the base station; and
in a case in which at least one control operation corresponding to the preference of the electronic device comprises a second predefined operation, initiate an operation of causing the second predefined operation to be performed when a time period has elapsed after the transmitting of the first message.

2. The electric device of claim 1, wherein the operation of causing the first predefined operation to be performed comprises an operation of determining a channel quality indicator (CQI) of at least one secondary cell as "0" and transmitting the CQI determined as "0" to the base station.

3. The electric device of one of claims 1 and 2, wherein the operation of causing the second predefined operation to be performed comprises an operation of transmitting a secondary cell group (SCG) failure message to the base station.

4. The electric device of one of claims 1 to 3, wherein
the first predefined operation comprises an operation associated with deactivation of at least one secondary cell, and
the second predefined operation comprises an operation associated with an SCG release.

5. The electric device of one of claims 1 to 4, wherein the initiating of the operation of causing the first predefined operation to be performed comprises, when a first overheating event occurs in a new radio (NR) non-standalone (NSA) environment, determining a CQI of at least one NR secondary cell as "0" and transmitting the CQI determined as "0" together with the first message to the base station.

6. The electric device of one of claims 1 to 5, wherein the initiating of the operation of causing the first predefined operation to be performed comprises, when a second overheating event occurs in an NR NSA environment, determining a CQI of at least one long-term evolution (LTE) secondary cell as "0" and transmitting the CQI determined as "0" together with the first message to the base station.

7. The electric device of one of claims 1 to 5, wherein the initiating of the operation of causing the second predefined operation to be performed comprises:
when a third overheating event occurs in an NR NSA environment, operating a first timer in response to the transmitting of the first message; and
transmitting an SCG failure message to the base station in response to a failure to receive the response to the first message from the base station while the first timer is operating.

8. The electric device of one of claims 1 to 7, wherein the initiating of the operation of causing the first predefined operation to be performed comprises, when a first overheating event occurs in an NR standalone (SA) environment, determining a CQI of at least one NR secondary cell as "0" and transmitting the CQI determined as "0" together with the first message to the base station.

9. The electric device of one of claims 1 to 8, wherein the instructions, when executed by the processor, cause the electronic device to, when a second overheating event occurs in an NR SA environment, perform a downlink communication with a number of antennas less than a number of reception antennas indicated by the base station.

10. The electric device of one of claims 1 to 9, wherein the instructions, when executed by the processor, cause the electronic device to:
when the first message is transmitted, operate a first timer having a time value according to a type of the overheating event and a second timer associated with an overheating indication prohibition; and
initiate the operation of causing the second predefined operation to be performed in response to a failure to receive the response while the first timer is operating.

11. The electric device of one of claims 1 to 10, wherein the instructions, when executed by the processor, cause the electronic device to:
determine whether a time value of a second timer associated with an overheating indication prohibition is less than a default time value of a first timer;
when it is determined that the time value of the second timer is greater than or equal to the default time value, maintain the default time value of the first timer;
when it is determined that the time value of the second timer is less than the default time value, change a time value of the first timer from the default time value to the time value of the second timer;
when the first message is transmitted, operate the first timer and the second timer; and
initiate the operation of causing the second predefined operation to be performed in response to a failure to receive the response to the first message from the base station while the first timer is operating.

12. The electric device of one of claims 1 to 11, wherein the instructions, when executed by the processor, cause the electronic device to:
when the first message is transmitted, operate a second timer associated with an overheating indication prohibition;
when the second timer expires, operate a first timer; and
initiate the operation of causing the second predefined operation to be performed in response to a failure to receive the response to the first message from the base station while the first timer is operating.

13. A method of operating an electronic device (101; 301; 401), the method comprising:
when an overheating event occurs, transmitting, to a base station, a first message comprising information associated with a preference of the electronic device for controlling overheating;
in a case in which at least one control operation corresponding to the preference of the electronic device comprises a first predefined operation, initiating an operation of causing the first predefined operation to be performed without waiting for a response from the base station; and
in a case in which at least one control operation corresponding to the preference of the electronic device comprises a second predefined operation, initiating an operation of causing the second predefined operation to be performed when a time period has elapsed after the transmitting of the first message.

14. The method of claim 13, wherein the operation of causing the first predefined operation to be performed comprises an operation of determining a channel quality indicator (CQI) of at least one secondary cell as "0" and transmitting the CQI determined as "0" to the base station.

15. The method of one of claims 13 and 14, wherein the operation of causing the second predefined operation to be performed comprises an operation of transmitting a secondary cell group (SCG) failure message to the base station.
